# EUROPEAN PATENT SPECIFICATION

(11) **EP 4 275 011 B1**
(45) Date of publication and mention of the grant of the patent: **02.09.2026**
(21) Application number: 22737112.7
(22) Date of filing: 06.01.2022
(51) Int. Cl.: G01B 9/02, G01J 3/45, G01D 5/26, G01D 5/353, G01L 1/24

(54) **SYSTEMS AND METHODS FOR FIBER OPTIC FOURIER SPECTROMETRY MEASUREMENT**
SYSTEME UND VERFAHREN ZUR FASEROPTISCHEN FOURIER-SPEKTROMETRIEMESSUNG
SYSTÈMES ET PROCÉDÉS DE MESURE PAR SPECTROMÉTRIE DE FOURIER À FIBRE OPTIQUE

(30) Priority: 06.01.2021 US 202163134573 P; 03.11.2021 US 202163275399 P; 04.12.2021 US 202163286033 P
(43) Date of publication of application: 15.11.2023
(73) Proprietor: Sentek Instrument LLC, Blacksburg, VA 24060 (US)
(72) Inventor: SUN, Haishan, Blacksburg, VA 24060 (US); BUITENKAMP, Dyon, Blacksburg, VA 24060 (US); THEIS, Logan, Blacksburg, VA 24060 (US); HARING, Andrew, Blacksburg, VA 24060 (US)
(74) Representative: Gramm, Lins & Partner Patent- und Rechtsanwälte PartGmbB
(86) International application number: PCT/US2022/011461
(87) International publication number: WO 2022/150493

(56) References cited:
- EP-B1- 2 825 860
- WO-A2-2010/136809
- US-A- 6 014 215
- US-A- 6 014 215
- US-A1- 2003 095 263
- US-A1- 2012 050 735
- US-A1- 2013 155 413
- US-A1- 2020 132 561
- US-A1- 2020 132 561

## Description

### CROSS-REFERENCE TO RELATED APPLICATIONS

This application claims priority to U.S. Provisional Application 63/134573, filed January 6, 2021, and to U.S. Provisional Application 63/275399, filed November 3, 2021, and to U.S. Provisional Application 63/286033, filed December 4, 2021.

### Technical Field

This invention generally relates to fiber optic sensors of one or more among pressure, acceleration, vibration, and temperature.

### Background

One technique for fiber optic measurement of pressure, acceleration, vibration, temperature, or strain, and combinations thereof is Fabry-Perot (FP) interferometry. FP interferometry uses a sensor head having one or more FP cavities, each having an optical path distance or difference (OPD) determined by its geometric dimension and fill medium, e.g., air, glass, or sapphire. Structure forming the FP cavity is configured to change, e.g., extend or compress, in turning changing the OPD, in response to the changes in the measured quantity. Demodulation of OPD changes yields measurement of changes in the subject quantity, e.g., pressure, acceleration, vibration, temperature, or strain. There are various types of OPD demodulation, but they can be addressed as being among two general types. One of the two types demodulates OPD changes without determining absolute OPD value. An example is quadrature phase detection, which uses two light beams of different optical wavelengths or frequencies such that the changes of these signals are 90° apart as the FP cavity OPD changes. Quadrature phase shift demodulation method can be low cost but has shortcomings. One is that FP cavity configurations suitable for this technique can have working range limitations that may be unacceptable for certain applications. Another is that the sensor initial OPD or the light wavelengths can require fine tuning, which is not suitable for mass production, to meet a quadrature phase condition necessary for operation.

Optical spectrum measurement has many applications, e.g., in industry and scientific research. One technique, often referred to as "monochromator," uses an element such as a diffractive grating to disperse input light spatially by light color or wavelength, and motor rotation of the grating or a mirror to change the wavelength of light reaching a photodetector at a fixed position. Configuration for a given wavelength range is by selecting a grating with an appropriate number of grooves per millimeter and a photodetector responsive to the wavelengths in the range.

Monochromators of such design, though, exhibit slow measurement acquisition and, due to requisite motor movement, which induces wear, may not be suitable for long-term continuous use.

Another optical spectrum measurement technique uses a photodetector array such as a CCD or CMOS array that may be used to measure the spatially dispersed light to realize motion free spectrum measurement. This method is well-known spectrometer. These photodetector arrays are usually based on silicon, which responds to wavelengths below 1.1 micrometers as dictated by silicon energy band gap. Therefore, these spectrometers are usually limited for shorter wavelengths. Although there are photodetector arrays such as InGaAs photodiode arrays that can work for longer wavelengths, they are often not well suited for the construction of high-performance spectrometers due to two reasons, namely their high cost and a rather limited number of detector elements which can strongly limit wavelength measurement resolution.

Another method of optical spectrum measurement is to use a tunable Michelson interferometer (TMI). A TMI may be constructed based on free space components such as described in U.S. Patent 9,025,156 B2 to Hirao. The optical path length of one arm of the TMI is tuned over a certain range by an actuator to generate varying optical interference signals. Optical spectrum of the input light can be obtained by Fourier transform spectrum analysis. Shaw et al (Pub. No.: US 2010/0108886 A1) shows an all fiber based TMI using a piezoelectric fiber stretcher for very long wavelength measurement. The fiber stretcher wraps a section of optical fiber on a piezoelectric cylinder. However, piezoelectric cylinders typically exhibit little change in diameters even under a relatively high voltage. Therefore, many revolutions of fiber are required to produce the needed fiber length modulation. Also, tension must be applied to the fiber during the fiber wrapping to enable the fiber to follow the piezoelectric motion. The long fiber plus the tension can make the precise control of fiber optical path length (OPL) and thus TMI OPD between the two arms difficult. This can be a technical problem, because OPL or OPD control is important for proper TMI operation.

US 20200132561A1 discloses a sensor measuring pressure and/or temperature by a diaphragm, a cavity and an optical fiber directing light into the cavity such that the light is reflected on the diaphragm's surface, and a detector detecting the reflected light, where Fabry-Pero-interferometry is applied and a white light source or tunable laser is used.

EP2825860B1 discloses a sensor measuring pressure with a first cavity, the pressure sensing cavity, via detecting an interference spectrum of reflected light, wherein the light source comprises two or more different wavelengths, and further describes compensating for temperature influence by a second cavity, the temperature sensing cavity.US 006014215A) discloses an optical pressure sensing system with an optical fiber emitting light onto two different reflectors and collecting reflected light from both reflectors, wherein a movable mirror scanning different positions and hence varying the optical path length difference, wherein two different interferograms are acquired corresponding to two different mirror positions.

WO 2010 136809 A2 discloses an optical measuring system for phase, frequency and amplitude of light in an optical fiber using an interferometer with an m x m coupler and distributed sensors within the optical fiber, wherein the phase modulation of the backscattered light is measured along the optical fiber.

### Summary

A method according to the invention is a method for measuring at least pressure, acceleration, strain, or temperature, steps of the example include injecting a light in a manner providing successive incidence with a sensor first reflecting surface and a sensor second reflecting surface, supported by structure that, responsive to changes in the pressure, acceleration, strain, or temperature, or combinations or sub-combinations thereof, changes a sensor optical path distance between the first reflecting surface and the second reflecting surface. Steps of the example include receiving sensor reflections, comprising reflections of the injected light from the first reflecting surface, and reflections of the injected light from the second reflecting surface, and routing the sensor reflections to an interferometer that includes a first optical path, having a first optical path length, starting at a first optical path start and ending at a first reflector, and includes a second optical path, having a second optical path length, starting at a second optical path start and ending at a second reflector. Steps of the example include propagating the sensor reflections within the interferometer, comprising propagating a first portion of the sensor reflections along the first optical path to incidence with the first reflector, propagating a second portion of the sensor reflections along the second optical path to incidence with the second reflector, propagating first reflector reflections of the first portion of the sensor reflections, along the first optical path, to the first optical path start, and propagating second reflector reflections of the second portion of the sensor reflections, along the second optical path, to the second optical path start. Steps of the example include phase shifting splitting a combination of the first reflector reflections of the first portion of the sensor reflections and the second reflector reflections of the second portion of the sensor reflections into separate channel signals, comprising first channel signals, second channel signals, and third channel signals, mutually spaced from another with respect to phase, and computerized measuring of the pressure, acceleration, strain, or temperature, or combinations or sub-combinations thereof, including computerized detecting of changes in the sensor optical path difference, based on the first channel signals, second channel signals, and third channel signals.

An example system can include a Fourier spectrometer, comprising an interferometer, including a first optical path structure that provides a first optical path, and a second optical path structure that provides a second optical path. In the example, the first optical path extends from a first path start to a first reflector, the first optical path has a first optical path length, the second optical path extends from a second path start to a second reflector, the second optical path has a second optical path length, and at least a segment of the second optical path comprises a tunable optical propagation medium and a tuning effectuator, which is configured to receive an optical path difference command and, in response, to effectuate a change in the tunable optical propagation medium that correspondingly changes the optical path difference, which is a difference between the first optical path length and the second optical path length. The example can include a scan controller, configured to perform a scanning process, comprising generating the optical path difference command, The examples can include an interferometer coupler, configured to receive a subject light, and couple the subject light to the interferometer in a configuration that instantiates: a propagation of a first portion of the subject light over the first optical path from the first path start to the first reflector, a propagation from the first reflector, over the first optical path from the first reflector to the first path start, of a first reflector reflection of the first portion of the subject light ,a propagation of a second portion of the subject light along the second optical path from the second path start to the second reflector, and a propagation from the second reflector, over the second optical path from the second reflector to the second path start, of a second reflector reflection of the second portion of the subject light. The example can include a spectrometry logic, coupled to the interferometer in a configuration for receiving and combining the first reflector reflection of the first portion of the subject light and the second reflector reflection of the second portion of the subject light, and generating a spectrometry data for the subject light, based at least in part on a Fourier transform of a result of the combining.

A system according to the invention is a system for measuring at least pressure, acceleration, strain, or temperature, can comprise a sensor cavity body, configured to receive an injection light and to provide an injection light optical path for the injected light that includes a hollow cavity first facing surface and a hollow cavity second facing surface, and configured such that changes in the force change a hollow cavity optical path difference between the hollow cavity first facing surface and the hollow cavity second facing surface. The example can include a splitter-router, configured to receive a sourced light from a light source, route the sourced light as the injected light, over an optical fiber to the sensor cavity body, receive from the sensor cavity body sensor reflection optical signals, which are responsive to the injected light and comprise hollow cavity first reflection signals from the hollow cavity first facing surface and hollow cavity second reflection signals from the hollow cavity second facing surface, and route at least a portion of the cavity body sensor reflection signals, as routed cavity body reflection signals. The example can include an interferometer, configured to receive the routed cavity body reflection signals, propagate the routed cavity body reflection signals such that a first portion of the routed cavity body reflection signals arrives, via a first optical path, at a first reflector and a second portion of the routed cavity body reflection signals arrives, via a second optical path, at a second reflector, reflect from the first reflector a portion of the routed sensor reflection signals, as interferometer first reflector signals, and reflect from the second reflector of another portion of the routed sensor reflection signals, as interferometer second reflector signals. The example can include a phase shifting splitter, configured to receive and combine, into interferometer reflector signals, the interferometer first reflector signals and the interferometer second reflector, and separate the interferometer reflector signals into separate channel signals, comprising first channel signals, second channel signals, and third channel signals, mutually spaced from one another with respect to phase. The example can include a computer implemented dynamic measuring logic, comprising a processor coupled to a data memory and an instruction memory, the instruction memory storing processor executable instructions that cause the processor perform the logic to detect changes in the hollow cavity optical path difference, based on the first channel signals, second channel signals, and third channel signals.

An example method, for measuring quantity, the quantity being force, or temperature, or both, can include steps comprising injecting a source light into a sensor body, the sensor body configured to provide an injection light optical path that includes a sensor body first reflective surface and a sensor body second reflective surface, and configured such that changes in the quantity change a sensor body optical path difference, which is between the sensor body first reflective surface and the sensor body first reflective surface; a step of receiving, from the sensor cavity body, sensor reflection optical signals comprising sensor body first reflection signals from the sensor body first reflective surface and sensor body second reflection signals from the sensor body second reflective surface. The example also can include routing at least a portion of the sensor reflection signals, as routed sensor reflection signals, to a slab interferometer that includes a slab and a photodetector array; and computerized dynamic measuring of the quantity. The computerized measuring steps include receiving, into a computer data memory, photodetector sensor signals from the photodetector array, and computerized determining of a measurement of the quantity, based at least in part on an optical path difference of the slab, and determining peak positions on the photodetector array of interference fringes.

Additional features are described, explicitly and implicitly, as will be understood by persons of skill in the pertinent arts upon reading the following detailed description and viewing the drawings, which form a part thereof.

### Brief Description of the Drawings

Fig. 1 shows a functional block schematic for an example sapphire cavity, coupler-based fiber optic pressure sensor, providing high-speed dynamic pressure measurement, in accordance with one or more embodiments.
Fig. 2 is a functional block schematic of an example Michelson interferometer configuration of a multiple interferometric cavity including hollow cavity sensor head, coupler-based fiber optic pressure sensor for high-speed dynamic pressure measurement, in accordance with one or more embodiments.
Fig. 3 is a functional block schematic of an example Fabry-Perot interferometer configuration of a sensor head that has multiple interferometric cavities including a hollow cavity, coupler-based fiber optic pressure sensor system for high-speed dynamic pressure measurement, in accordance with one or more embodiments.
Fig. 4 is a functional block schematic of an example Michelson interferometer configuration of a multiple interferometric cavity including hollow cavity sensor head coupler-based fiber optic pressure sensor, featuring circulator and splitter tapping of sensor reflected light for optical path difference (OPD) measurement, for high-speed dynamic pressure measurement, and for absolute pressure measurement, or absolute temperature measurement, or both, in accordance with one or more embodiments.
Fig. 5 is a functional block schematic of one example Michelson interferometer configuration alternative implementation of the Fig. 4 example system, featuring an additional splitter implemented tapping of sensor reflected light into an OPD measurement device in accordance with one or more embodiments.
Fig. 6 is a functional block schematic of one example optical spectrometer of implementation of an OPD measurement device for systems according to embodiments such as shown in Fig. 4 and Fig. 5, providing absolute pressure measurement, absolute temperature measurement, or both, in accordance with one or more embodiments.
Fig. 7 is a functional block schematic of one example tunable optical bandpass filter and photodetector implementation of an OPD measurement device for systems according to embodiments such as shown in Fig. 4 and Fig. 5, providing absolute pressure measurement, absolute temperature measurement, or both, in accordance with one or more embodiments.
Fig. 8 is a functional block schematic of one example configuration of a reflection mode slab interferometer implementation of an OPD measurement device for systems according to embodiments such as shown in Fig. 4 and Fig. 5 for absolute pressure measurement, absolute temperature measurement, or both, in accordance with one or more embodiments.
Fig. 9 is a functional block schematic of one example configuration of a transmission mode slab interferometer implementation of an OPD measurement device for systems according to embodiments such as shown in Fig. 4 and Fig. 5, for absolute pressure measurement, absolute temperature measurement, or both, in accordance with one or more embodiments.
Fig. 10 is a functional block schematic of one example configuration of tunable interferometer OPD measurement device for Fig. 4 and Fig. 5 systems according to one or more embodiments, for providing processes and methods of absolute pressure measurement, absolute temperature measurement, or both, in accordance with one or more embodiments.
Fig. 11 shows an illustrative pattern of interference fringes that can be obtained in tuning any tunable interferometer in this application such as the one as shown in Fig. 10, via repeated scanning of a reflector where a second reflection is produced.
Fig. 12 is a functional schematic of one example slab-interferometer, photodetector demodulation configuration of a sapphire cavity, fiber optic pressure sensor system for high-speed dynamic pressure measurement, in accordance with one or more embodiments.
Fig. 13 is a functional block schematic of one example configuration of a multiple interferometric cavity including hollow cavity, slab-interferometer, photodetector demodulation, fiber optic sensor system, featuring an additional splitter, and providing for processes and methods of high-speed dynamic pressure measurement and absolute measurement of pressure and temperature in accordance with one or more embodiments.
Fig. 14 is a functional schematic of one example implementation of an exemplary sapphire wafer, OPD measurement device, fiber optic temperature sensor system according to one or more embodiments, and providing for processes and methods of temperature measurement in accordance with one or more embodiments.
Fig. 15 is a cut-away projection of one example configuration of a sensor head for vibration measurement, acceleration measurement, or both, using sensor head that has multiple interferometric cavities including a hollow cavity, fiber optic sensor systems according to one or more embodiments, e.g., Fig. 2, Fig. 3, Fig. 12, or Fig. 13.
Fig. 16 is a functional block schematic of an example all fiber, tunable Michelson interferometer (TMI) based Fourier spectrometer according to one or more embodiments.
Fig. 17 is a functional block schematic of one example all fiber, TMI based Fourier spectrometer according to another embodiment, featuring a position controllable reflector for precise control of the precise control of the TMI beginning OPD for each TMI tuning cycle.
Fig. 18 is a functional block schematic of one example tunable Mach-Zehnder interferometer (TMZI) based spectrometer according to another embodiment, including an example TMZI OPD control via electric current through a metal coating of a tunable fiber arm.
Fig. 19 is functional block schematic of an adaptation of a TMZI based Fourier spectrometer, configured such as the Fig. 18 example, with TMZI arm being a tunable OPL arm and the other TMZI arm a reference arm, and including a feature for determining the OPL of the reference arm.
Fig. 20 is a functional block schematic of one example tunable Fabry-Perot interferometer (TFPI) based Fourier spectrometer according to another embodiment.
Fig. 21 is a cut-away projection view of an example structural configuration of a capillary tube, metal clad reservoir tube OPL control for systems and methods of TFPI based Fourier spectrometry in accordance with various embodiments.
Fig. 22 is a cut-away projection view of another example structural configuration of a capillary tube, piezoelectric diaphragm OPD control for systems and methods of TFPI based Fourier spectrometry in accordance with various embodiments.
Fig. 23 is a functional block schematic of an example interrogator, showing application of a Fourier spectrometer in accordance with various embodiments to examples in any of Figs. 16, 17, 18, 19, or 20.
Fig. 24 shows a functional block schematic of one example application of systems according to embodiments such as shown by the Fig. 23 example, using a sapphire cavity sensor head configuration as shown in Figs. 1, 2, 3, 4 and other figures herein.
Fig. 25 represents a photodetector output from a scanning that covers two reference FP OPDs and a sensor head OPD, in systems according to various embodiments such as shown by example in Fig. 24.
Fig. 26 shows a functional block schematic of one example system for both quasi-static and dynamic measurements in accordance with various embodiments, combining an example interrogator according to various embodiments such as shown by the example in Fig. 23, and an example Michelson interferometer configuration sapphire cavity, coupler-based fiber optic pressure sensor according to embodiments such as shown by the example in Fig. 2.
Fig. 27 shows a functional block schematic of one example system for both quasi-static and dynamic measurement in accordance with various embodiments, using one Michelson interferometer.
Fig. 28 shows a functional block schematic of another example system for both quasi-static and dynamic measurement in accordance with various embodiments, using one Michelson interferometer with an example alternative configuration, replacing an M x N fiber coupler in the Fig. 27 example with an MxM fiber coupler.
Fig. 29 shows a functional block schematic of an example application of a system according to various embodiments such as shown by the example in Fig. 28, for both quasi-distributed sensing using a serial arrangement of multiple FP sensors, in accordance with various embodiments.
Fig. 30 shows a functional block schematic of an example application of a system according to various embodiments such as shown by the example in Fig. 28, for both quasi-static and dynamic measurement using a serial arrangement of multiple fiber Bragg gratings (FBGs) in accordance with various embodiments.
Fig. 31 shows a TMI or any tunable interferometer positioned before the light injection into the sensing fiber.
Fig. 32 shows a distributed sensing network containing multiple sensing fibers and each sensing fiber comprising one or multiple sensors.
Fig. 33 shows 1xN fiber coupler replaced by a 1xN or 1x(N+1) fiber switch, permitting the interrogation of the multiple sensing fibers one after another in time, with reference sensors connected to a 2x2 fiber coupler.
Fig. 34 shows the 1xN fiber coupler replaced by a 1xN or 1x(N+1) fiber switch, with reference sensors connected to the fiber switch as presented in Figure 18.
Fig. 35 shows multiple sensing fibers may be interrogated by time division multiplexing (TDM).
Fig. 36 shows the TMI positioned to the detector end as shown in Figure 20.

### DETAILED DESCRIPTION

According to various embodiments, systems and methods can provide optical fiber interferometer-based high speed, dynamic measurement of pressure, acceleration, vibration, temperature, or strain, and of various combinations thereof.

In various embodiments, systems and methods can, concurrent with optical fiber interferometer-based high speed, dynamic measurement of pressure, acceleration, vibration, or temperature, provide Fourier spectrometer-based, high accuracy absolute measurement of pressure, acceleration, vibration, temperature, or strain, and various combinations thereof.

Disclosed embodiments further include optical fiber interferometer-based Fourier spectrometer systems and spectrometry methods providing, among other benefits and advantages, high accuracy, low implementation cost absolute measurement of pressure, acceleration, vibration, temperature, or strain and various combinations, without requiring high cost, high element count photodetector arrays, without performance bounding by photodetector array wavelength response limitations, and without inherent high mechanical wear.

Various embodiments further include, but not limited to systems and methods of high speed, dynamic measurement of pressure, acceleration, vibration, or temperature, and of various combinations thereof with optical fiber interferometer-based absolute measurement of optical path distance or difference (OPD).

One example fiber optic Fourier spectrometer system includes a tunable Michelson interferometer (TMI), comprising a first arm and a second arm, formed respectively by a first optical fiber extending to a first reflector, and a second optical fiber extending to a second reflector. The example system can include a directional coupler, e.g., M x N fiber directional coupler, with one of its M ports configured to receive a subject light for spectrometry measurement, e.g., from a measurement light input optical fiber, split the light into a first portion and second portion, route the first portion to an end of the first fiber opposite the first reflector, and route the second portion to an end of the second fiber opposite the second reflector.

According to various embodiments, the TMI first arm, or the TMI second arm, or both, include a tunable optical path length (OPL) structure. For purposes of description, it will be assumed for this example that the TMI first arm includes the tunable OPL structure. More detailed description in later sections of this disclosure addresses other permutations. The tunable OPL structure can be configured to receive an OPL control signal and, in response to changes of the OPL control signal, correspondingly change a state, e.g., temperature or geometry in a manner changing the effective OPL of the first arm.

The example TMI Fourier spectrometer system can include an optical detector coupled to another of the directional coupler's M ports, an analog-to-digital converter configured to sample the optical detector output, and a digital signal processor configured to the A/D samples. The digital signal processor can include a processor coupled to a data memory and to an intangible instruction memory storing processor readable instructions.

In an example operation the MxN fiber directional coupler can be further configured to receive, at the one of the N ports coupled to the first arm proximal end, optical reflection signals from the first arm reflector and, at the one of the N ports coupled to the second arm proximal end, receive optical reflection signals from the second arm reflector, combine the optical reflection signals from the first arm reflector with the optical reflection signals from the second arm reflector and output the combination at the one of the N ports that is coupled to the optical detector.

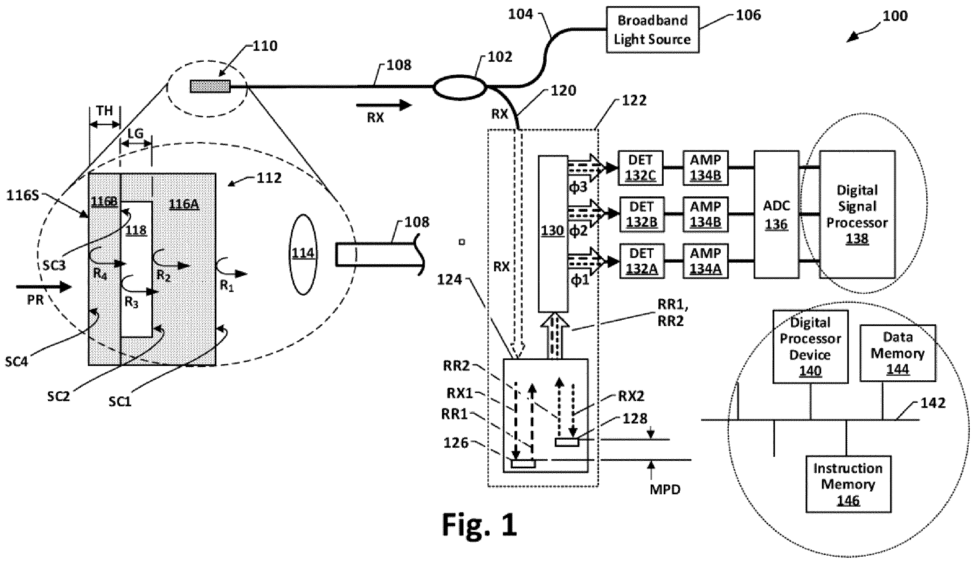

Fig. 1 shows a functional block schematic of an example configuration 100 (hereinafter "system 100") of a sensor head that has multiple interferometric cavities including a hollow cavity, fiber optic high-speed dynamic pressure measurement system according to various embodiments. System 100 includes a splitter 102, configured to receive, e.g., from optical fiber feed 104, an injected light from a light source 106 and route the injected light to an optical fiber 108 that extends to an FP sensor head 110. The light source 106 preferably having a broadband emission spectrum, or a short coherence length is used in the system. The light source 106 may be, for example and without limitation, a light emitting diode, a superluminescent diode, or a source, e.g., a multi longitudinal mode laser diode or a quantum dot laser that emits light having a spectral width that can be greater than a single mode laser. The light source 106 may be a laser diode which may be single mode or multimode. The light source 106 may be, for example, a multimode diode laser, which can be operated at a driving current that may be below, equal to, or above the lasing threshold. For certain applications, the light source 106 laser may be operated under a condition resulting in reduced coherence length.

The FP sensor head 110 includes an FP cavity body 112, that can but does not necessarily contact a distal end of the optical fiber 108, wherein "distal," in this context, means an end of the optical fiber opposite the end that couples to the splitter 102. In an embodiment, the distal end of the optical fiber 108 can be spaced from a first surface SC1 of the FP cavity body 112. In a further embodiment, a collimator lens 114 can be arranged within the spacing. The Fig. 1 example configuration of the FP cavity body 112 includes a front plate 116A, e.g., a sapphire plate, bonded to a cylinder 116B and, as visible in Fig. 1, the front plate 116A and cylinder 116B can be respectively structured to contain and define, when bonded to one another, the geometrical features and dimensions of a hollow cavity 118.

For purposes of description the first surface SC1 of the FP cavity body 112 will be alternatively referenced as a "first reflection surface SC1." As used herein "reflection surface" and "reflecting surface" mean an interface between two media causing a usable portion of an incident light at an operative wavelength to reflect as a reflection beam. According to various embodiments, the FP cavity body 112 can be structured to provide an optical path for light from broadband light source 106 that can include a succession of reflection surfaces, including the first reflection surface SC1, a second reflection surface SC2, third reflection surface SC3, and fourth reflection surface SC4, collectively referenced herein as "sensor reflection surfaces SC." In operations of the system 100, the sensor reflection surfaces SC reflect respective portions of the injected light from the light source 106, which propagate as sensor reflections back to the splitter 102, as described in more detail in later paragraphs.

The FP cavity body 112 may be, but is not necessarily formed by sapphire-to-sapphire direct bonding of the front plate 116B to the cylinder 116A. Options for fabricating the FP sensor head 110 include, but are not limited to techniques described in U.S. Patent 9,804,033 B2 (hereinafter also referenced as "the '033 patent") including, for example and without limitation, the technique the '033 patent describes in reference to its Figure 1-6, including bonding a sapphire sensor structure to a crystal sapphire rod or tube. Options for such bonding, if using the above referenced '033 fabrication techniques for fabricating an FP sensor head implementing the FP sensor head 110, in practices according to one or more embodiments, can include, without limitation, direct sapphire to sapphire bonding without using foreign material or any intermedium. In one or more embodiments, a hollow sapphire cavity structure implementing the FP cavity body 112 may be fabricated by bonding onto a hollow tube or rod via other means, such as, without limitation, welding, brazing or adhesive. In such fabrication, materials for the sensor interferometric cavities and the hollow tube or rod can include, but are not limited to, inorganic material, metallic material, e.g., single crystal sapphire, alumina, glass, and metal.

In an example operation, injected light from the light source 106 propagates from the distal end of the optical fiber 108, through the collimator lens 114, if present, and continuing to incidence with the first reflection surface SC1. A portion of the incident light reflects and propagates back through the optical fiber 108 toward the splitter 102 as sensor first reflection signal R1and a remaining portion continues through a base region of the sapphire cylinder 116A toward the second reflection surface SC2, which is formed by an interface of sapphire materials of the sapphire cylinder 116B and the medium that fills the hollow cavity 118. Upon incidence with the second reflection surface SC2, a portion of the then-remaining injected light is reflected and propagates back toward the splitter 102 as sensor second reflection signal R2, and a remaining portion continues across the hollow cavity 118 to a third reflection surface SC3, which is an inward facing surface of the front plate 116A. Upon incidence with the third reflection surface SC3, a portion of the then-remaining injected light is reflected and propagates back toward the splitter 102 as sensor third reflection signal R3, and a portion continues through the front plate 116A to the fourth reflection surface SC4, from which another portion is reflected and propagates back toward the splitter 102 as sensor fourth reflection signal R4.

The FP cavity 112 can be secured or mounted, in its end application, such that a subject pressure, such as the example labeled "PR" on Fig. 1, acts on the surface labeled 116S. For such applications, the front plate 116B thickness TH can be selected such that, at least over a range of pressure PR to be measured, changes in the pressure cause corresponding changes in deflection of the front plate 116B, in turn causing change in the length LG of the hollow cavity 118, i.e., changes in the distance between SC2 and SC3.

The Fig. 1 example structure and geometry of the FP cavity 112 is only an example, and the example is for the example application of measuring pressure PR, e.g., a gas pressure, incident on a front-facing surface 116S of the front plate 116B. FP cavity bodies having other structures and geometries can be used for measuring other conditions, e.g., acceleration or vibration, or temperature, as described in more detail in later sections of this disclosure.

As described above, the splitter 102 of the system 100 can be configured to receive, e.g., from optical fiber feed 104, injected light from the light source 106 and route the injected light to the optical fiber 108 connecting to the FP sensor head 110, and to receive sensor reflections RX from the above-referenced reflective surfaces SC of the FP cavity 112, of light from the light source 106, and route the sensor reflections RX, e.g., over an optical fiber 120, to a multiple channel output interferometer function 122. For purposes of describing features by example, Fig. 1 shows an example three-channel output configuration of the multiple channel output interferometer function 122. The three-channel example is not to be understood as a limitation on practices in accordance with disclosed embodiments. General configurations route sensor reflections RX to propagate over different optical paths of an interferometer, having respectively different optical path lengths, combine the differently phase-shifted results to obtain an interference light beam, and provide the interference light beam to an analyzer for spectral analysis. Alternatives to the three-channel output configuration include more than three output channels. Other alternative configurations can include less than three output channels.

Referring to Fig. 1, according to various embodiments, the three-channel output interferometer function 122 can be configured as a Michelson interferometer-based functionality, examples of which are described in more detail in later sections of this disclosure. According to various other embodiments, examples of which are described in more detail in later sections. the three-channel output interferometer function 122 can be configured as a FP interferometer-based functionality. The Fig. 1 graphics within the three-channel output interferometer function block 122 are therefore not limitations on hardware arrangement or architecture. The graphics represent functionalities provided, in Michelson interferometer embodiments, via features and operations particular to such embodiments and, in FP interferometer embodiments, via features and operations particular to those embodiments.

Referring to Fig. 1, functionalities of the three-channel output interferometer function 122 include a two-path, two-reflector propagation 124 that includes a first optical path length propagating and a second optical path length propagating. The first optical path length propagating delivers a first portion RX1 of the sensor reflections RX to a first reflector 126, and delivers first reflector 126 reflections RR1 of the first portion RX1 to a phase shifting channelizing 130. The second optical path length propagating delivers a second portion RX2 of the sensor reflections RX to a second reflector 128, and delivers second reflector 128 reflections RR2 of the second portion RX2 to the phase shifting channelizing 130. The difference between the first optical path length and the second optical path length can be twice a propagation distance, labeled "MPD" on Fig. 1, between the first reflector 126 and the second reflector 128. As described in more detail in later sections of this disclosure, in accordance with various embodiments, setting the distance MPD between the first reflector 126 and second reflector 128 such that the difference between the first optical path length and the second optical path length is approximately equal the propagation distance between the FB cavity body 112 second reflection surface SC2 and third reflection surface SC3, can provide a computationally efficient demodulation, using phase shifted versions of combinations of RR1 and RR2, of the distance between SC2 and SC3. This can provide, in turn, in applications such as shown in Fig. 1 where the distance between SC2 and SC3 changes with respect to the pressure PR, high speed measuring of PR.

Functionalities of the phase shifting channelizing 130 include delivering a demodulator first channel input ø1, demodulator second channel input ø2, and demodulator third channel input ø3, in configurations providing advantages that can include, but are not limited to low computation demodulating as identified above. According to various embodiments, the demodulator first channel input ø1 is a first phase version of a first portion of a combination of RR1 and RR2, the demodulator second channel input ø2 is a second phase version of a second portion of the combination of RR1 and RR2, and the demodulator third channel input ø3 is a third phase version of a third portion of the combination of RR1 and RR2. According to various embodiments, the phase shifting channelizing 130 can be configured such that the first portion, second portion, and third portion of the combination of RR1 and RR2, which can provide, as described in more detail in later sections of this disclosure, a mutual phase separation of 120 degrees between the demodulator first channel input ø1, demodulator second channel input ø2, and the demodulator third channel input ø3.

System 100 resources for the above-identified demodulating and for other features described in more detail in later sections, can include a first channel first photodetector 132A that can feed a first channel amplifier 134A, a second channel second photodetector 132B that can feed a second channel amplifier 134B, and a third channel first photodetector 132C that can feed a third channel amplifier 134C. The first channel amplifier 134A, second channel amplifier 134B, and third channel amplifier 134C can feed an analog-to-digital converter (ADC) 138, which can feed a digital signal processor 138. In accordance with various embodiments, the digital signal processor 138 can include a digital processor device 140 couped by a bus 142 to a data memory 144, and an instruction memory 146. The instruction memory 146 can include a tangible, non-volatile data storage that can store processor executable instructions that, when executed by the digital processor device 140, cause the digital processor device 140 to perform steps implementing methods and system logic in accordance with various disclosed embodiments.

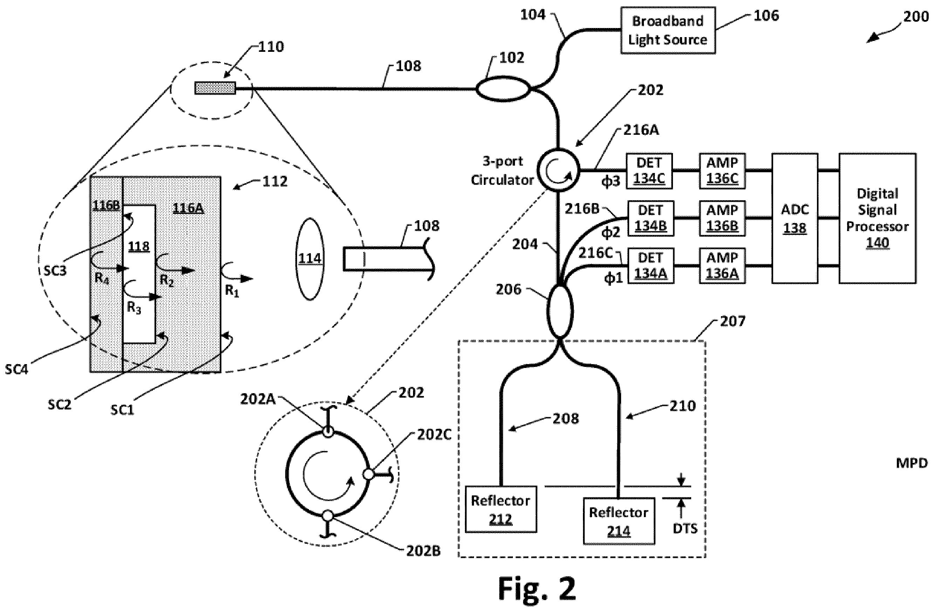

Fig. 2 shows a functional block schematic of an example 200 (hereinafter "system 200") of an adaptation of the system 100, implementing the Fig. 1 three-channel output interferometer function 122 using a Michelson interferometer implementation of fiber optic pressure sensor for high-speed dynamic pressure measurement, in accordance with one or more embodiments. System 200 shows the Fig. 1 broadband light source 106, optical fiber 104, splitter 102, optical fiber 108, sensor head 110, optical detectors 132, amplifiers 134, ADC 136, and digital signal processor 138.

These RX reflections from the sapphire sensor head 110 are routed, via the same fiber splitter 102 to a fiber circulator 202 that can include, as shown in the enlarged viewing area, respective ports 202A, 202B, and 202C. The fiber circulator 202 routes the sensor reflections RX, e.g., via a fiber segment 204, to a symmetric 3x2 optical coupler 206. The fiber circulator 202, in the Fig. 2 example configurations, performs other isolation and routing operations, described in more detail in later paragraphs. The fiber circulator 202 is only an example implementation of the above-described and referenced system 200 optical routing functions. Example alternative implementations include, but are not limited to, a 1x2 fiber splitter or a 2x2 fiber coupler. The symmetric 3x2 optical coupler 206 can be an example implementation of what may be generically referenced as a MxN coupler 206, in which M and N are equal to or greater than 3 and 1, respectively. The MxN coupler 206 may or may not be symmetric, wherein "symmetric," as used herein in this context means the splitter is symmetric, i.e., the power splitting is equal. Description that follows of example operations through or interfacing with the M x N coupler 206 assume the implementation in which the splitting is symmetric.

Operations can include reflections RX from the sensor head 110 enter the 3x2 fiber coupler 206 from one of the coupler's three input ports and are split into a first portion or first light beam that enters a first arm 208 and a second portion of second light beam that enters a second arm 210. The first arm 208 and second arm 210 can be respective segments of optical fiber. As shown in Fig. 2, the example implementation includes a first reflector 212 at a terminating or distal end of the first arm 208 and a second reflector 214 at a terminating or distal end of the second arm 210. The first reflector 212 and second reflector 214 (collectively "reflectors 21X") can be configured as reflective coatings on each their respective fiber distal ends. The reflectors 21X can be alternatively implemented as Faraday rotation mirrors, or as any other objects that can reflect the light beams back into the fibers. The optical path length (OPL) of each of the first arm 208 and second arm can be given as twice the arm's effective length or, more formally, as 2Ln_{eff} where L is the arm fiber length and n_{eff} is the fiber effective index of refraction. The optical path difference (OPD) between the OPL of the first arm 208 and the OPL of the second arm 210 will be referenced, for purposes of description, as OPD_{coupler}. Also, for purposes of description, the OPD of the hollow cavity 118 is defined as OPDₛₑₙₛₒᵣ, which is given by 2L (L is the hollow cavity length).

For purposes of describing further features, light source coherence length L_{c} will be introduced, and can be expressed according to Equation 1: $length {L}_{c} = {λ}^{2} / Δλ$ where Δλ is the source spectral width.

According to various embodiments, L_{c} may be configured as not greater than and, according to other embodiments, to be greater than ΔOPD as defined by Equation (2) $Δ OPD = \left|{OPD}_{coupler}-{OPD}_{sensor}\right|$

To avoid optical interference of the hollow chamber 118 reflections R₂ or R₃ with other reflections such as R₁ and R₄, L_{c} may be chosen such that any OPD defined by any pair of reflections except for R₂ and R₃ is greater or much greater than the source coherence length. This ensures that the optical interference signal out of each DET is contributed only by the interference between R₂ and R₃. For some applications, and in come conditions, this requirement may be necessary, and for other applications and other conditions, the requirement may be unnecessary. There may be other conditions under which OPDₛₑₙₛₒᵣ can be demodulated even when this coherence length requirement is not met or not in place. One example of such conditions or applications can be conditions in which OPDₛₑₙₛₒᵣ varies with a speed faster or much faster than the rate of change of any other OPDs, in which cases OPDₛₑₙₛₒᵣ may still be demodulated.

The respective reflections from the first arm 208 and the second arm 210, which correspond functionally to the Fig. 1 reflections RR1 and RR2, respectively, are split between the three input ports of the MxN coupler 206, as demodulator first channel input ø1, demodulator second channel input ø2, and demodulator third channel input ø3. These reflections are then detected in each channel by a photodetector (DET). In one channel, a 3-port circulator, which may be replaced by a 1x2 or 2x2 fiber coupler, is used to separate the 3x3 coupler reflections from the input signal returned from the sensor. In the case of a symmetric 3x2 or 3x3 fiber coupler, the three detected signals are 2π/3 or 120° apart in their phases with one another. The optical phase change of the hollow FP cavity can be accurately determined by the processing of these three signals.

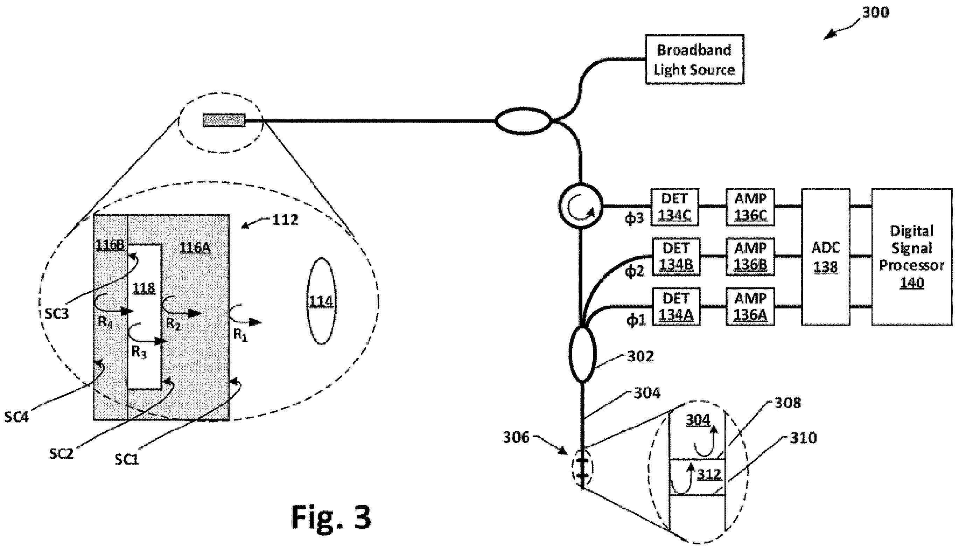

According to various embodiments, instead of providing three-channel output interferometer function 122 using Michelson interferometer such as the Fig. 2 example formed by the first arm 208 and second arm 210 connecting to the two output ports of the 3x2 fiber coupler 206, the functionality can be provided by a Fabry-Perot interferometer coupled, for example, to one of the two interferometer-facing ports of the system 200 3x2 optical fiber coupler 206. Implementation can include re-configuring the 3x2 optical fiber coupler 206 as a 3x1 fiber coupler. An example configuration is shown by Fig. 3, which is a functional block schematic of one example configuration 300 of a sensor head that has multiple interferometric cavities including a hollow cavity, coupler-based Fabry-Perot interferometer fiber optic pressure sensor for high-speed dynamic pressure measurement (hereinafter "system 300"), in accordance with one or more embodiments.

Referring to Fig. 3, the example system 300 substitutes a 3x1 coupler 302 for the 3x2 optical coupler 206 of system 202, and connects, e.g., directly or via optical fiber segment 304, an FP interferometer 306. The FP interferometer 306 comprises first reflector 308 and a second reflector 310 that is separated or spaced a distance, by a medium 312, from the first reflector 308. spaced by medium. According to various embodiments, the difference between the two OPDs, meaning difference between the OPD corresponding to the first reflector 306 and the OPD corresponding to the second reflector 310, is preferably not greater than the coherence length of the light source. However, for some applications this preference may not be necessary. Regarding the medium 312 between the first reflector 308 and the second reflector 310, options can include but are not limited to, a segment of the same optical fiber as 304, air, vacuum, or any other optically transparent material. According to various embodiments, absent the medium 312 being optical fiber, light that passes through the first reflector 308 may be collimated prior to incidence with the second reflector 310 and, in other embodiments, collimation can be omitted. In implementations where collimation is included, options can include, but are not limited to, quarter pitch graded index multimode optical fiber.

Features and benefits of sensor systems according to embodiments as described above in reference to Figs. 1, 2, or 3, and combinations thereof, can include without limitation high speed dynamic pressure measurement. According to various embodiments, such features and benefits can be expanded to include, without limitation, measurement of absolute pressure, or temperature, or both. One general embedment that provides this and further expansion comprises various combination that include tapping, into an OPD measurement device, a portion of the light reflected from the sensor head.

The OPD measurement device may permit measurement of the absolute OPDs of some or all FP cavities in the sensor head. The sapphire OPDs formed by R1 and R2 or R3 and R4 are primarily temperature dependent but insensitive to pressure while the hollow cavity OPD may be sensitive to both pressure and temperature. Simultaneous measurement of these OPDs may thus permit accurate determination of both pressure and temperature at the same time. Also, OPD measurement device may measure just one of the sapphire cavities to deduce temperature. This measured temperature may be used to compensate for the thermal dependence of the hollow cavity OPD for accurate pressure measurement.

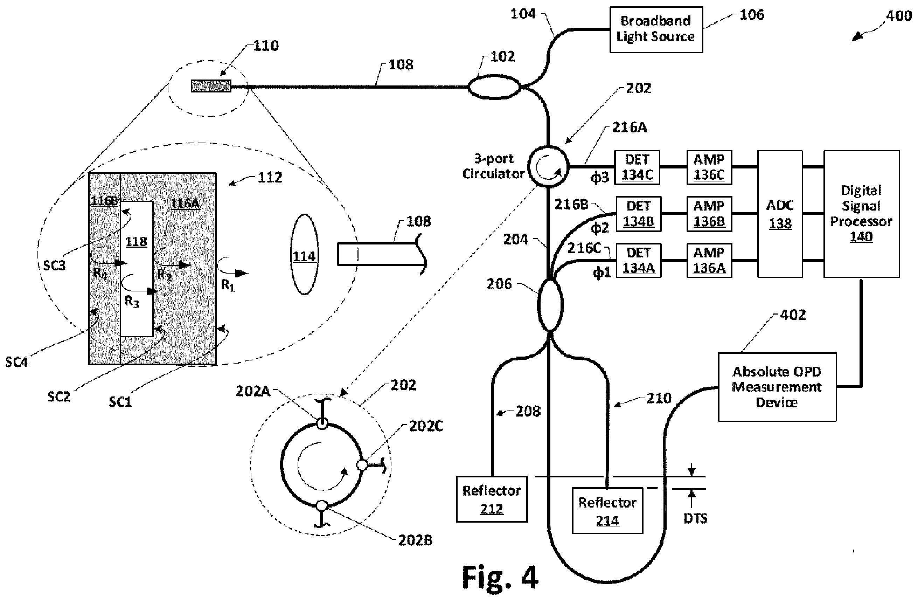

Fig. 4 shows a functional block schematic of one example implementation of an exemplary sapphire cavity, coupler-based Michelson interferometer fiber optic pressure sensor system 400, featuring circulator 202 and splitter 206 tapping of sensor reflected light into an absolute OPD measurement device 402. As described in more detail in subsequent paragraphs and other sections of this disclosure, feature provided by the tapping and absolute OPD measurement include, for example and without limitation, in combination with high-speed dynamic pressure measurement, absolute pressure measurement, or absolute temperature measurement, or both, in accordance with one or more embodiments.

The absolute OPD measurement device 402 may be implemented as an optical spectrometer, a tunable optical bandpass filter along with a photodetector, a slab interferometer in conjunction with an image sensor array, a tunable OPD scanner or any other device that permits the measurement of one or multiple OPDs of the sapphire sensor.

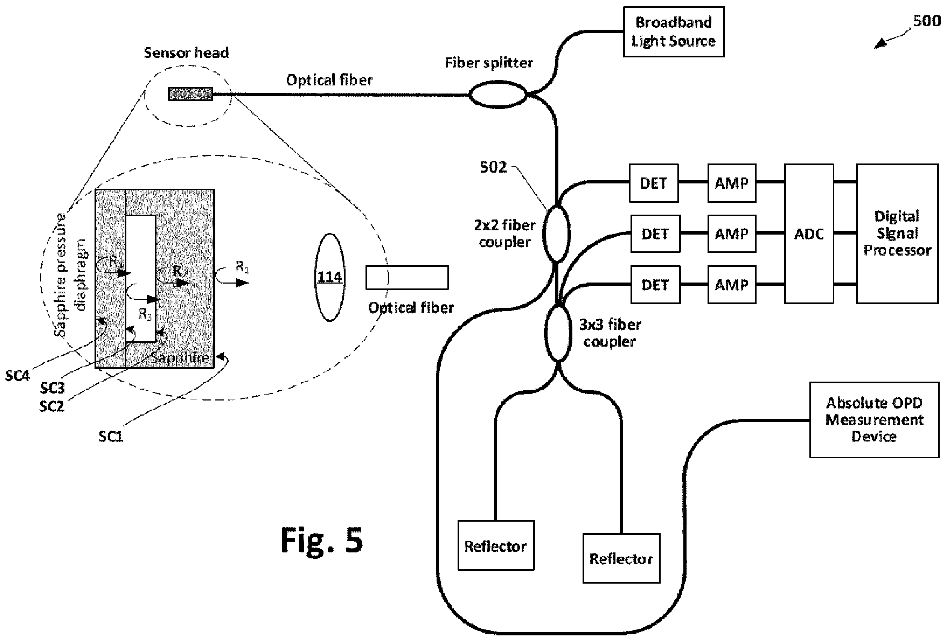

Fig. 5 is a functional block schematic of one example Michelson interferometer configuration alternative implementation of the Fig. 4 example system, featuring an additional splitter implemented tapping of sensor reflected light into an OPD measurement device in accordance with one or more embodiments.

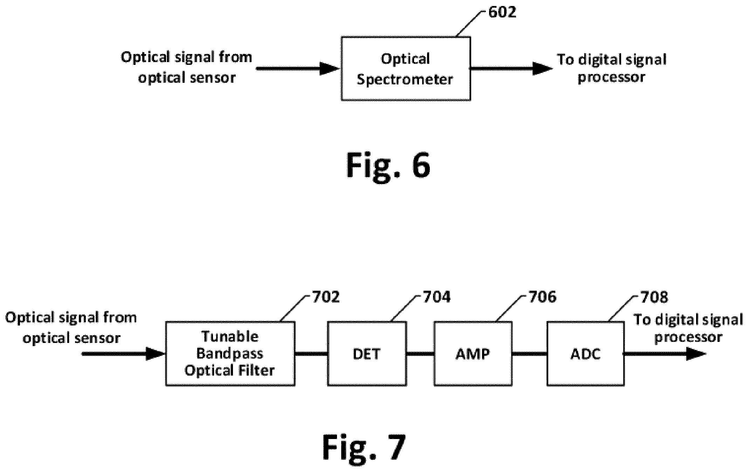

An example optical spectrometer implementation of the absolute OPD measurement device 402 is shown in Fig. 6. An example tunable optical bandpass filter implementation is shown in Fig. 7. Referring to the above-described example sensor refection surfaces SC of FP cavity body 112, in accordance with various embodiments, optical spectrum of the sensor reflection signal RX can be applied to determine the OPDs between the first reflection surface SC1 and the second reflection surface SC2, causing the first reflection R1 and second reflection R2, respectively, and between the third reflection surface SC3 and the fourth reflection surface SC4, causing the third reflection R3 and fourth reflection R4, respectively. The optical spectrum of the sensor reflection signal RX can be applied to determine, separately or in combination with the above, the OPDs between the second reflection surface SC2 and the third reflection surface SC3, causing the second reflection R2 and third reflection R3, respectively. The OPD determination can be determined between any pairs of two reflections from the sensor.

According to various embodiments, OPD determination may be achieved by a whitelight interferometric signal processing algorithm. The obtained OPDs can then be related to pressure and temperature providing, for example and without limitation, simultaneous measurement of absolute pressure and temperature.

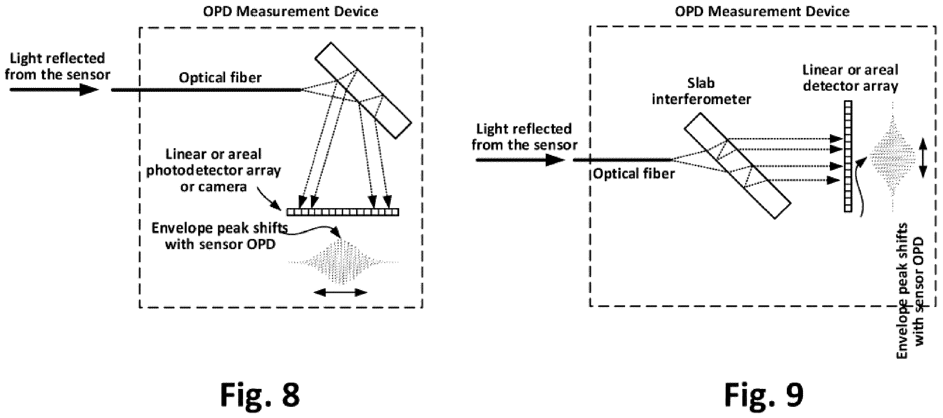

In an embodiment, reflections from the sensor head, e.g., from FP cavity body 112, are tapped into this OPD measurement device and are projected onto an optically transparent wafer which may be glass wafer that may or may not have two parallel surfaces. The wafer may also be any other transparent material that is transparent to the light from the optical source. The material may but is not limited to crystals such as semiconductors. It may also be formed by reflective surfaces separated by air or vacuum. The light reflecting surfaces may or may not be coated with reflective coatings and may or may not be curved. This structure is referred to as a slab interferometer. The reflections from the slab interferometer are detected by a linear and areal photodetector array or image sensor. At the same time, the reflections from the slab front and rear surfaces interfere with each other. Given the divergence of the light out of the fiber, the incidence angle of the light to the slab is dependent on the position where the light is reflected by or enters the slab. Consequently, the OPD difference between the front and rear surface reflections is dependent on the light incidence position on the slab, which leads to interference fringes on the image sensor. Meanwhile, the relatively short light coherence length leads to varying amplitude of the interference fringes on the image sensor as illustrated in Fig. 8 or 9. The peak position of the fringes envelope corresponds the matching of the slab OPD with a sensor OPD, which may be defined by R1 and R2, R2 and R3, or R3 and R4. Any change in the OPD will thus lead to a shift in the position of the fringes envelope peak. By the measurement of the envelope peak position, the sensor OPD can be determined.

The sensor OPD may be related to a temperature or pressure variation. For example, the OPD defined by R1 and R2, or R3 and R4 is mainly temperature dependent, and the OPD formed by R2 and R3 is pressure sensitive due to the pressure induced diaphragm deflection. As a result, a temperature or pressure change will shift the fringes envelope peak position on the photodetector array or image sensor and can be accurately measured. It will be understood that more than one sensor OPD may be measured by the OPD measurement device. Different OPDs will appear on the image sensor as separate groups of interference fringes and each group of fringes has its own envelope peak. The shifts of these envelope peak positions offer a clear indication of the corresponding sensor OPD value.

Another example of the OPD measurement device is based on a slab interferometer in either reflection or transmission mode as illustrated in Figs. 8 and 9. Here we use the reflection mode operation as an example to describe the operation principle but the transmission mode as in Fig. 9 is similar.

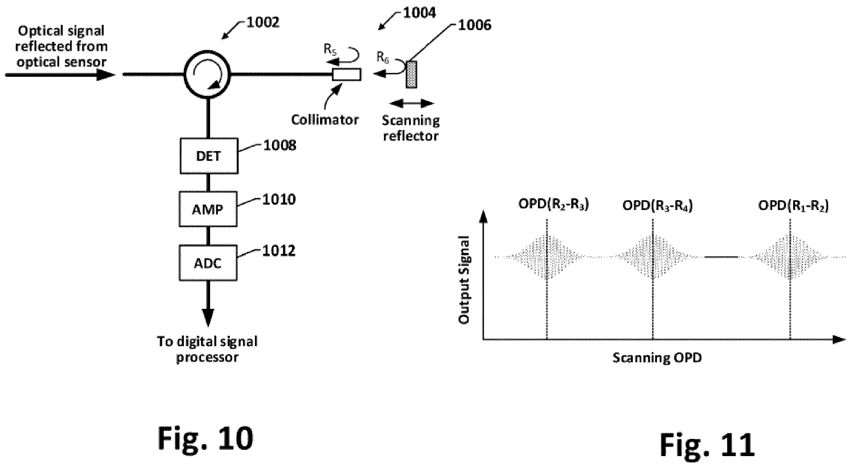

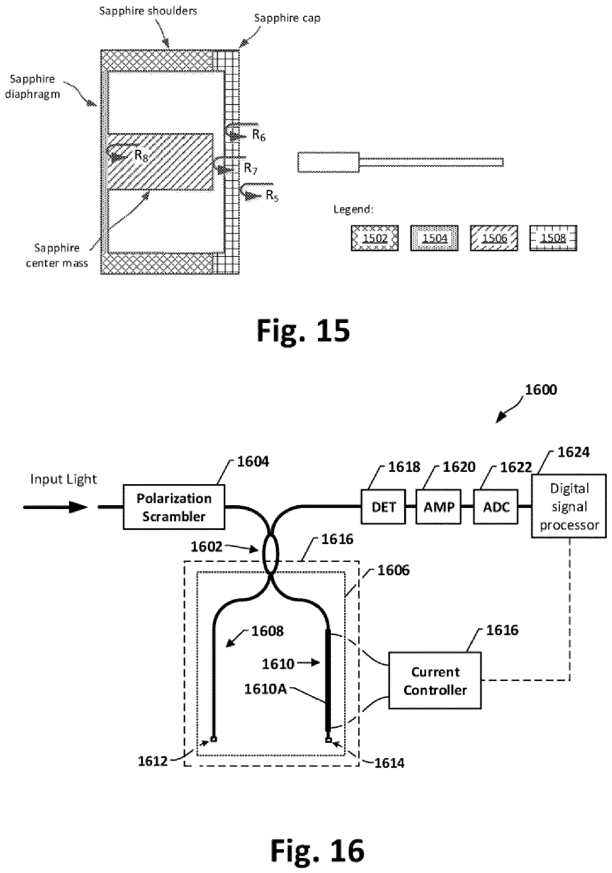

The OPD measurement device can also be constructed with a tunable interferometer as will be described in more detail referring to examples shown in Figs. 10 and 11. Referring to Fig. 10, light reflected from the sensor, e.g., sensor head 110, first passes through a 3-port fiber circulator 1302 and enters a tunable interferometer 1004 where two reflections, R5 and R6, are generated. The second reflection R6 is generated by a reflection surface 1006, which is scannable The OPD defined by the two reflections R5 and R6 can be tuned periodically by repeated scanning of the reflection surface 1006 where the second reflection R6 is produced. The reflector may or may not be linear in time. The reflections R5 and R6 from the tunable interferometer are detected by the photodetector (DET) 1008 followed by an electronic amplifier (AMP) 1010. The amp 1010 output signal is digitized by an analog to digital converter (ADC) 1012 and is further processed by the digital signal processor as shown in Figs. 16-20, and 23-24. Fig. 11 shows an illustrative amplitude plot of interference fringes that can be obtained in tuning a tunable interferometer as shown in Fig. 10, via repeated scanning of a reflector where a second reflection is produced. As seen in Fig. 11, a group of interference fringes with varying amplitude will appear every time the scanning interferometer OPD moves across a sensor OPD. The multiple sensor OPDs therefore may generate multiple groups of interference fringes with their envelope peak positions indicating the sensor OPDs.

Scanning of the Fig. 10 tunable interferometer 1004 is not limited to actuator positioning of the deflector surface 1008. Other tuning method s include but are not limited to the application of electric or magnetic fields to a material that exhibits piezoelectricity or magnetostriction, a galvanometer, a MEMS mirror or scanner, and thermal expansion of a solid or liquid via temperature control.

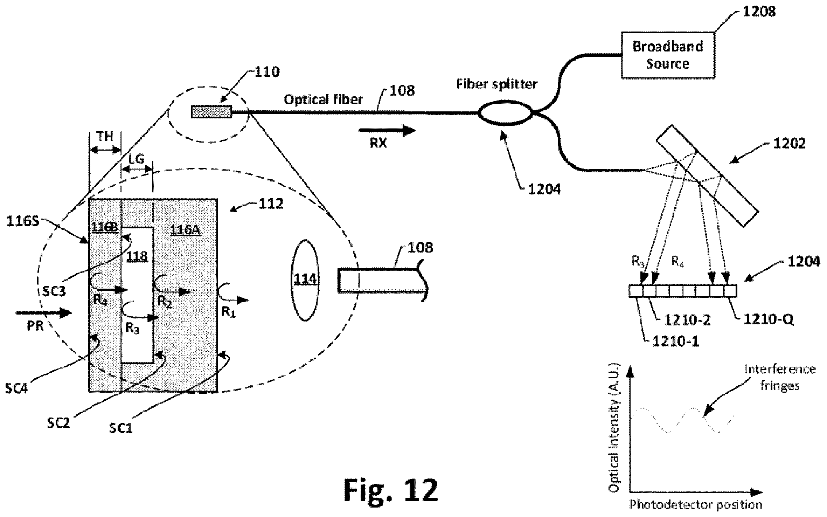

Fig. 12 shows a functional block schematic of an example for sapphire-cavity, slab-interferometer based high-speed dynamic pressure measurement according to one or more of such embodiments. The example system 1200, for purposes of description, shows its sensor head as the sensor head 110 described above, connected by the described optical fiber 108. This is only an example and is not intended to limit practices according to the Fig. 12 example to the sensor head 110. The system 1200 includes a slab interferometer 1202 coupled, e.g., through a feed fiber, to a fiber splitter 1204, and includes a broadband light source 1208 coupled to another port of the fiber splitter 1204. The slab interferometer 1202 includes integer Q photodetector elements, 1210-1, 1210-2, ..., 1210-Q. Features of the system 1200 include, as described in more detail in paragraphs hereinbelow, one or more embodiments that can be implemented using, for example, three photodetector elements 1210, i.e., Q can be integer 3.

In an example operation, injected light from the broadband light source 1208 propagates to the sensor head 110, and sensor head reflection signals R1, R2, R3, and R4 that propagate back are routed by the fiber splitter 1206 to the slab interferometer 1202. In accordance with one or more embodiments the slab interferometer 1202 can be configured such that its photodetectors 1210 capture the sensor head reflection signals at different positions of the interference fringes, providing an accuracy of detecting their phases that, in turn, provides accurate demodulation of the sensor head OPD defined by R₂ and R₃. One such configuration of the slab interferometer 1202, according to various embodiments, uses photodetectors 1210 with phases of ϕ₁, ϕ₁+(Nπ+2π/3), and ϕ₁+(Nπ+4π/3) where N is an integer. This enables, as identified above, implementations of the slab interferometer 1202 that provide sensor OPD demodulation using 3 photodetector elements. Another example configuration uses four photodetector elements 1210 whose phases are made to be ϕ₁, ϕ₁+(Nπ+π/4), ϕ₁+(Nπ+π/2) and ϕ₁+(Nπ+π) where N is also an integer.

It will be understood that the phases identified above are only examples and are not limitations on the practices according to disclosed embodiments. arranged to have many other relative values that can also permit accurate the sensor OPD demodulation. The number of photodetectors can be as small as 2, 3 or 4. Theoretically the number can be hundreds to thousands. However, fewer detectors may permit greater speed of light detection and lower cost of system implementation. This design may thus be an attractive option for high-speed dynamic pressure measurement.

Systems according to various other embodiments, can include adaptations of embodiments such as the example shown in Fig. 12, which can provide absolute measurement of pressure and temperature in combination with high-speed dynamic pressure measurement capability is retained.

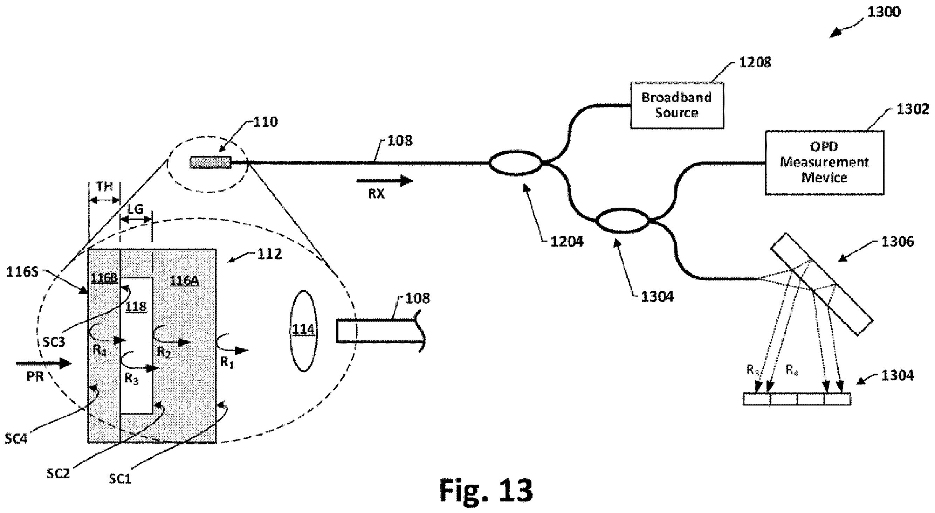

Besides the 3x2 or 3x3 fiber coupler-based systems in Figs. 2-5 for measurement of dynamic pressure and/or absolute pressure and temperature, another embodiment is presented in Fig. 13. The reflections RX from the sensor head are projected onto a slab interferometer 1302 which, as seen from Figs. 12 and 13, can be the same as the slab interferometer 1202 in Fig. 12.

The difference is provided by the Fig. 13 photodetector array 1304, comprising a small number of detector elements, as opposed to the Fig. 12 photodetector array 1204, which comprises a large number of detector elements, the Fig. 13 The number of detector elements in the Fig. 13 configuration may be, for example and without limitation, as small as 3. The slab interferometer is designed such that these photodetectors capture the optical signals at different positions of the interference fringes, so their phases permit accurate demodulation of a sensor OPD defined by R₂ and R₃. One example is to have the three phases to be ϕ₁, ϕ₁+(Nπ+2π/3), and ϕ₁+(Nπ+4π/3) where N is an integer. This design enables 3 photodetector demodulation of sensor OPD. Another example is to use four photodetector elements whose phases are made to be ϕ₁, ϕ₁+(Nπ+π/4), ϕ₁+(Nπ+π/2) and ϕ₁+(Nπ+π) where N is also an integer. The phases are just examples. In fact, they can be arranged to have many other relative values that can also permit accurate the sensor OPD demodulation. The number of photodetectors can be as small as 2, 3 or 4. Theoretically the number can be hundreds to thousands. However, fewer detectors may permit greater speed of light detection and lower cost of system implementation. This design may thus be an attractive option for high-speed dynamic pressure measurement.

The Fig. 12 system can be modified to provide absolute measurement of pressure and temperature while the high-speed dynamic pressure measurement capability is retained. One such example design is given in Fig. 13, which shows a functional block schematic of one example system 1300 according to one or more of such embodiments. System 1300 is a sapphire cavity, slab-interferometer, photodetector demodulation, fiber optic pressure sensor system, featuring an additional splitter, and providing for processes and methods of high-speed dynamic pressure measurement and absolute measurement of pressure and temperature in accordance with one or more embodiments.

For purposes of description, the example system 1300 is shown as an adaptation of system 1200, including the above-described system 1200 combination of functionalities and features, in a further combination also including an OPD measurement device 1302 and second fiber splitter 1304. The system 1300 combination provides, for example and without limitation, absolute measurement of pressure and temperature at the sensor head.

The second fiber splitter 1304 can be implemented as a 1x2 fiber splitter, and is configured to split sensor reflections into two channels. The OPD measurement device 1302 can be implemented using, for example, any OPD measurement device according to any among Figs. 6, 7, 8, 9, and 10-11.

System 1300, in an example operation, can feed via one of the two output channels of the second fiber splitter 1304, shown in the Fig. 13 arrangement as the lowermost of the two, feeds the slab interferometer 1306. The other of the two output channels of the second fiber splitter 1304, shown in the Fig. 1 arrangement as the uppermost of the two, feeds to the OPD measurement device 1302.

The OPD measurement device 1302, by absolute measurement of one or multiple sensor OPDs, enables determination of temperature, pressure, or both

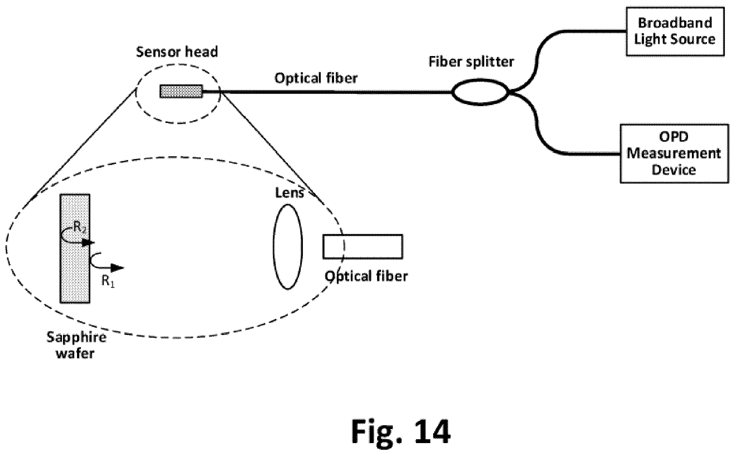

Various embodiments can provide adaptations, such as but not limited to, reduced adaptations, of one or more of the above-described systems. Fig. 14 shows a functional block schematic of one example system 1400 according to such an embodiment. System 1400 is a reduced feature adaptation of Fig. 5 system 500, which can be used in applications requiring measurement of temperature but not pressure. System 1400 provides reduced complexity because, temperature requires one sensor OPD of , namely the OPD between from reflective surface SF1 and surface SF2 which is related to temperature. The collimator or the lens may or may not be needed. In the case of no light collimation, the fiber may be placed to the proximity of the sensor so the sensor reflections can be partially captured by the fiber with sufficient optical power for signal detection.

The sensor head in Figure 1, 2, 3, 12 or 13 may be replaced by a different design as depicted in Fig. 15 for vibration or acceleration measurement. Fig. 15 shows. More specifically, a cross-cut projection of an example sensor head 1500 for various systems for vibration measurement, acceleration measurement, or both, which can be implemented using the sensor head 1500 as a substitute for the sensor head 110, and adaptation of systems such as shown by examples in Fig. 2, Fig. 3, Fig. 12, or Fig. 13. The sensor head 1500 is fabricated with sapphire but other materials such as silica, metal or even polymer may be used. A piece of extra mass is fabricated on the pressure diaphragm. The size and geometry of the extra mass can be designed to vary from application to application. The mass will force the diaphragm to deflect or oscillate under vibration, which in turn changes the gap between R2 and R3. The measurement of this OPD change or oscillation is the same as previously described for the systems in Fig. 2, 3, 12, or 13.

Fig. 16 is a functional block schematic of an example all fiber, tunable Michelson interferometer (TMI) based Fourier spectrometer 1600 according to one or more embodiments. The TMI based Fourier spectrometer 1600 can receive an input light, either directly into a port of a 2x2 coupler 1602 or input the port after passing through a polarization scrambler 1604. The polarization scrambler 1604, if present, can be a configuration that randomizes the state of polarization of the input light either in time or in the spectrum domain. Spectral domain polarization randomization, for purposes of the present description, means the state of polarization varies rapidly with wavelength changes. The polarization scrambler 1604, if used, may or may not be free space or optical fiber based and may be an active or a passive device, i.e., may be or may not be powered by electricity.

In an example operation, the input light, either directly or after passing through the polarization scrambler 1604 enters a TMI 1606, which comprises at least a portion of the 2x2 fiber directional coupler 1602, a reference (Ref.) fiber arm 1608 and an OPL tunable fiber arm 1610. The function of the TMI is to vary its OPD between the two arms. This may be realized by tuning of one or both arms, provided the TMI OPD is changed in time. The two arm fibers may be the same, similar or dissimilar in the fiber core, cladding or coating materials. Here we use one arm tunable as an example.

The TMI OPD may be tuned by different methods. One is the tunable arm OPL tuning can be tuned by the control of an electric current through the fiber coating as illustrated in Figure 16. One example is to use a section of metal-coated optical fiber in the tunable arm. The metal coating may be any metal, which may include but is not limited to copper, aluminum, copper or aluminum alloy, nichrome or any other metal that is electrically conducting. The current may vary in time with a sawtooth, triangle or any other waveform that can produce a current-dependent fiber temperature. The temperature change induced by the current has two effects on the fiber. One is the thermo-optic effect by which the fiber refractive index is modulated by the temperature change. The second effect is the fiber dimensional change due to the fiber coating expansion or contraction, which in turn changes the fiber core axial length, and secondarily perturbs the fiber refractive index via the elasto-optic effect. Via these effects, electric current tuning can therefore modulate the tunable arm fiber OPL and in turn the TMI OPD.

The fiber OPL tuning may not be limited to the change in the current through the fiber coating. The fiber may be placed in an environment where temperature is tuned. The environment may be a metal tube that encapsulates the fiber, in combination with a controlled electric current that runs through the metal tube to vary the fiber temperature. The fiber may also be simply placed on a thermoelectric cooling pad. The fiber may also be coated in materials that exhibit a magnetostrictive or piezoelectric effect, where the fiber OPL is tuned by applying a varying magnetic or electric field along the fiber by a wire coil or by any other means that can change magnetic or electric fields. The fiber may be coated in any other material that can change its OPL and be varied in a controlled manner or else otherwise measured.

To increase the TMI OPD tuning range for a given electric current or magnetic/electric field or to increase TMI tuning speed, the clad diameter of the tunable fiber may or may not be reduced. Also, the tunable fiber or the metal tube that encapsulates the tunable fiber may be placed in air, liquid or solid that may have a desired thermal conductivity to increase the TMI tuning speed.

The 2x2 fiber coupler 1602 may be, in a more general implementation, an MxN fiber coupler having more than two input or output fiber ports. The 2x2 fiber coupler 1602 or MxN generic implementation thereof may or may not be wavelength flattened. Features of implementing the 2x2 fiber coupler 1602 or MxN generic implementation thereof as a wavelength flattened coupler include its power splitting ratio being, at least over a wavelength range of interest, insensitive to the wavelength of input light.

In an embodiment, the TMI based Fourier spectrometer 1600 includes, at the distal end of each fiber arm, i.e., at the end of an optical fiber forming each of the reference arm 1608 and the OPL tunable fiber arm 1610 has an optical reflector at its far end, such as the reference arm end reflector 1612 and tunable arm end reflector 1614, collectively "end reflectors 1612,1614." The end reflectors 1612,1614 may be any objects that can reflect part or all of the input light power. Each reflection may or may not change the state of polarization of the input light. The end reflectors 1612,1614 may be, for example, simply cleaved fiber ends, reflective coatings, Faraday rotation mirrors, fiber Bragg gratings or any other objects, either distributed or discrete, that can reflect part or all of the incident optical power. The end reflectors 1612,1614 may or may not be mirrors mounted to the fiber ends with or without a standoff distance. Mirror implementations of the end reflectors 1612, 1614 may or may not be fibers with a cleaved and polished end, which may or may not be coated with a reflective coating or may or may not be polished metal wires. Implementations of the end reflector 1614, 1614 can include reflector surfaces separated from the distal ends of the reference arm 1606 and tunable arm 1608. In such implementations, the gaps may or may not be filled with an optically transparent liquid or index-matching adhesive. In these cases, the distal end of the optical fiber forming the light propagation medium of the reference arm 1608 and distal end of the optical fiber forming the light propagation medium of the reference arm 1610 may or may not be coated with anti-reflection coatings.

In an embodiment the fiber ends may or may not have light collimators. In the case of a standoff reflective mirror, the gap between the fiber end which may or may not have a collimator and the reflecting mirror may be air, reduced air or vacuum. The gap may or may not be filled with an inert gas or gases that may or may not have unique absorption lines as the Fourier spectrometer calibration.

Part of, or the entire TMI may or may not be placed in a temperature-controlled environment such as a thermal electric cooling (TEC) chamber 1616 as shown in Fig. 16.

The light beams reflected from the TMI two arms are combined and detected at the photodetector (DET) whose output is amplified by an amplifier (AMP) and then digitized by an analog-to-digital convertor (ADC) for further signal processing to determine the optical spectrum of the input light.

The optical spectrum measurement can be explained as below. Assuming the electric fields *E*(*t*) and *E*(*t + τ*) from the TMI reference and tunable arms respectively that interfere with each other at the photodetector to have the same amplitude. The interference light signal is given by $I \left(τ\right) = \left〈{\left|E\left(t\right)+E\left(t+τ\right)\right|}^{2}\right〉 ,$ where: 〈 〉 represents time average, and
*τ* is the differential time delay of light propagation in the TMI two arms, which is given by Equation (4): $τ = \frac{OPD}{c}$ where:
c is the velocity of light in vacuum.

The OPD is given by Equation (3): $\left|OPL\left(Reference\right)-OPD\left(Tunable\right)\right|$

By the Wiener-Kinchine theorem, the Fourier transform of this interference signal gives the input light intensity spectrum.

Features of fiber-based Fourier optical spectrometers according to disclosed embodiments include, but are not limited to, the capability of measuring any wavelength of interest or any range of wavelengths of interest, subject to the optical fibers being sufficiently transparent to that wavelength or range thereof.

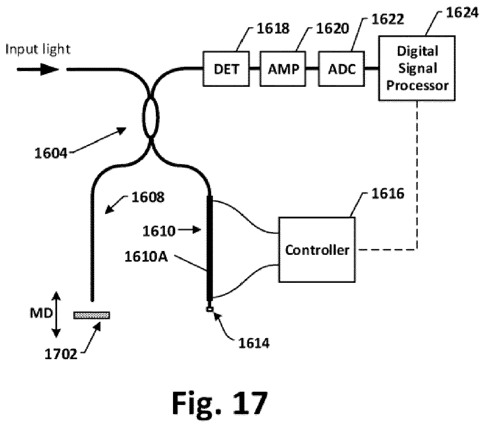

According to various embodiments, in addition to the above-described control of the tunable arm OPL of the TMI, the TMI OPD may also be tuned by controlled displacement of a mirror, in the reference or in the tunable arm fiber, or both. Fig. 17 shows a functional block schematic of an example system 1700 that includes an example configuration of such a feature. The illustrated system 1700 is shown as an adaptation of Fig. 16 system 1600, to focus description on the controlled displacement mirror feature, not to limit embodiments to the Fig. 16 examples system.

The mirror displacement may be but is not necessarily controlled by an actuator. In embodiments including actuator control of mirror displacement, implementation can comprise any electrically powered actuator.

The mirror is not to tune repeatedly or periodically the arm OPL or the interferometer OPD. According to various embodiments, the mirror provides for setting the beginning OPD of the interferometer OPD tuning cycles.

According to various embodiments, tunable interferometers other than TMIs may be used.

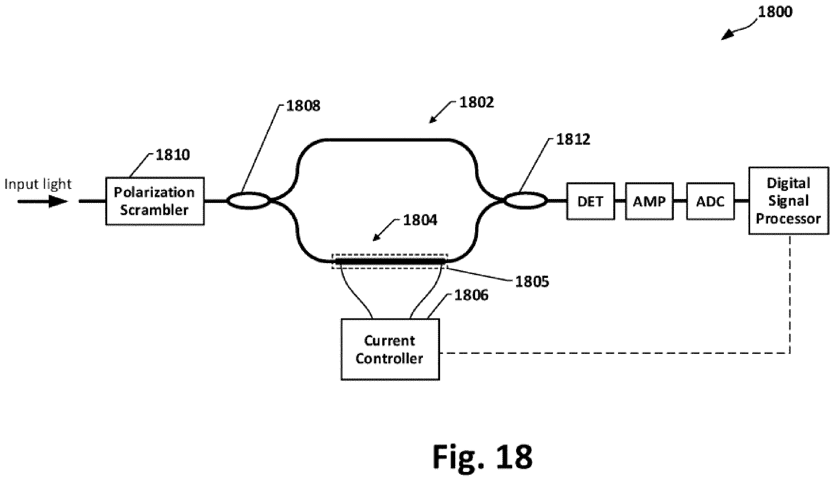

Fig. 18 shows an example of a tunable Mach-Zehnder interferometer (TMZI) based spectrometer 1800 where the TMZI OPD is tuned by the control of electric current through the metal coating of the tunable fiber arm. At the same time, the TMZI OPD may also be tuned, for example, by any other means described in reference TMI shown in Fig. 16

Precise control of the beginning OPD of a tunable interferometer may or may not be needed to deduce the input light intensity spectrum.

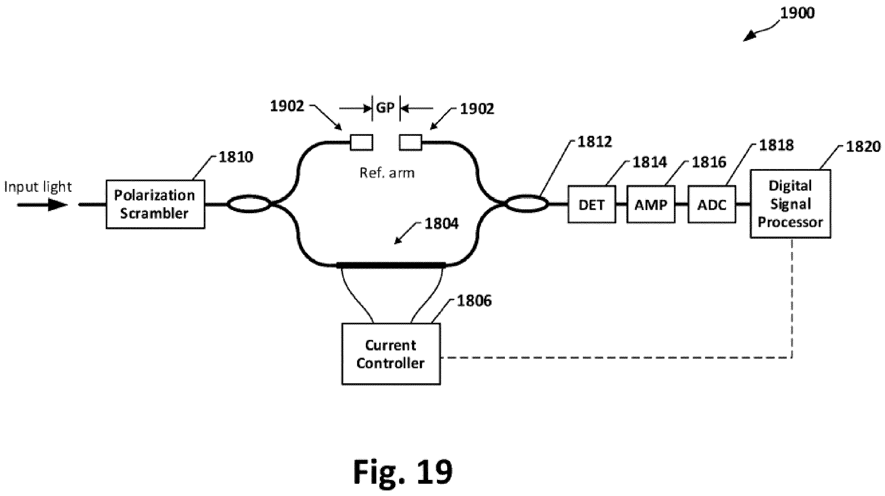

Fig. 19 presents an example method 1900 to adjust the OPL of the reference arm. A pair of optical fiber collimators 1902 are used to transmit light from one fiber into the other across a gap "GP" which can be adjustable to a value as needed to achieve a desired beginning TMZI OPD value which may or may not be zero before the TMZI tuning begins. The gap GP between the collimators 1902 may or may not be filled with an index matching liquid. The gap GP may be air, reduced air or vacuum or may or may not be filled with an inert gas or gases that may or may not have unique absorption lines as the Fourier spectrometer calibration.

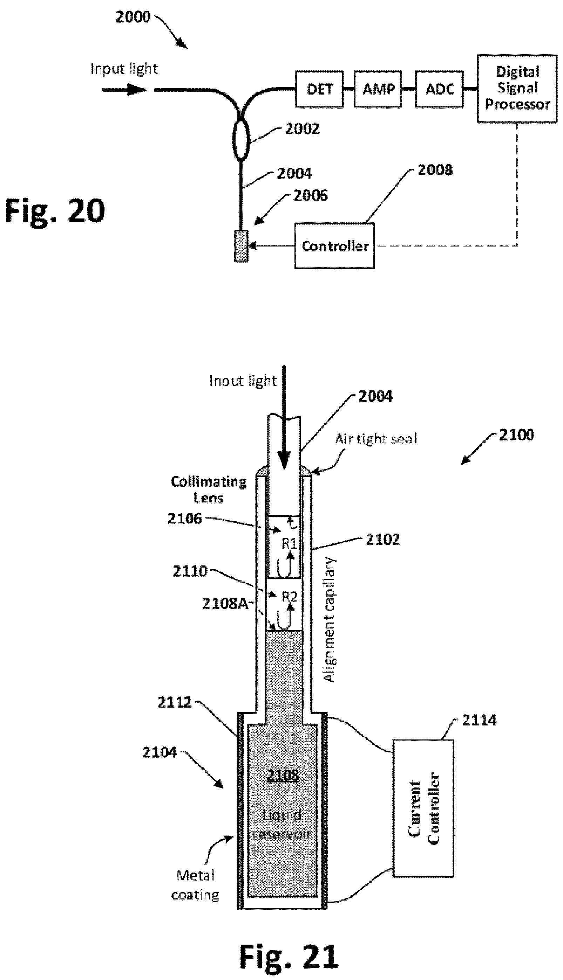

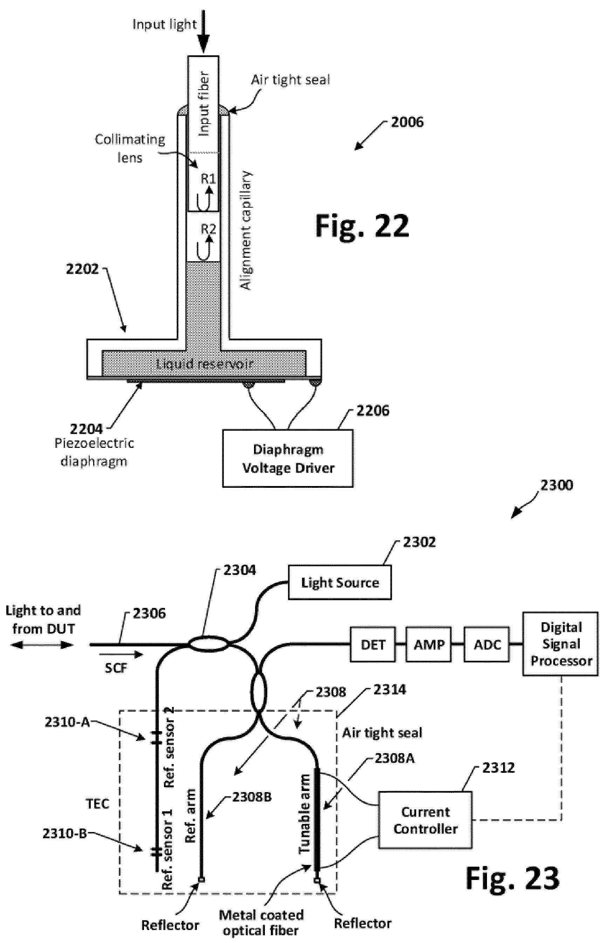

According to various embodiments, in one alternative to TMI and TMZI, a tunable Fabry-Perot interferometer (TFPI) can be utilized to build a Fourier spectrometer. A functional block schematic of an example TFPI interferometer system 2000 is shown on Fig. 20. Referring to Fig. 20, the TFPI OPD can be tuned in time by any means as described in reference to the TMI based Fourier spectrometer embodiments. One example means is shown in Fig. 21, and another is shown in Fig. 22. For both the Fig. 21 and Fig. 22 examples, the light out of the input fiber in the TFPI may be, but is not necessarily collimated by a lens. The collimating lens, if used, may be but is not limited to being a section of graded-index multimode optical fiber. The fiber end may be coated, without limitation, with a reflection enhanced coating. In an operation of both the Fig. 21 and Fig. 22 examples, light propagates along the connecting fiber 2004 to the fiber's distal end, from which a portion reflects and propagates as a first reflection in a reverse direction back through the connecting fiber 2004. The remainder propagates across a gap to the top surface of a liquid in an alignment capillary tube. A portion of the remainder reflects and propagates as a second refection, back across gap and into the connecting fiber The liquid may be, but is not necessarily a liquid holding reservoir. The capillary tube or the reservoir tube may be but is not necessarily coated with a metal that is electrically conducting. The metal choices for the coating include, but are not limited to the coatings identified in description above of exemplary TMI based Fourier spectrometers as previously described. The substance in the gap may be any of the choices for the gap between a fiber end and a mirror or between two fiber collimators as previously described in the TMI or TMZI.

The Fig. 21 example tuning means includes an alignment capillary tube 2102 extending upward from a reservoir base 2104. An end section of the connecting fiber 2004 projects into and is airtight sealed within a bore of the alignment capillary tube 2102. A collimating lens 2106 can be included and, if so, can be positioned close to end of the connecting fiber 2004. The reservoir base 2104 may be but is not necessarily a simple structured, long section of the same diameter as the alignment capillary tube 2102. In an embodiment, an example of which is shown in Fig. 21, the reservoir base 2104 may be a tube of a larger diameter than the alignment capillary tube 2102. A fluid 2108 fills an interior of the reservoir base and extends upward to a top surface 2108A within the alignment capillary tube 2102. The collimating lens 2006 can include a reflective surface facing a gap 2110 above the top surface 2008A of the fluid. In the Fig. 21 example, an electrically conductive metal layer or coating 2112 surrounds the reservoir base 2104. A tuning current controller 2114 connects to and passes an adjustable tuning current through the electrically conductive metal layer or coating 2112. In implementation that include the metal layer or coating 2112, metal choices include, but are not limited to, the coatings identified in description above of exemplary TMI based Fourier spectrometers as previously described. The

In operation light propagates along and exits the distal end of the connecting fiber 2004, passes through the collimating lens 2006 to the reflective surface facing the gap 2110. A portion reflects from the reflective surface and propagates as a first reflection R1 in a reverse direction back through the connecting fiber 2004. The remainder propagates across the gap 2110 to the top surface 2108A of the liquid in an alignment capillary tube 2102. A portion of the remainder of the light reflects and propagates as a second refection R2, back across gap 2110 and into the connecting fiber 2004.

The Fig. 22 tuning means uses the alignment capillary tube 2102 and collimating lens 2006 of the Fig. 1 means, but arranges the alignment capillary tube 2102 to extend from a diaphragm-controlled reservoir base 2202. The diaphragm-controlled reservoir base 2202 encloses a reservoir liquid-holding space that is varied by movement of a piezoelectric diaphragm 2204, which is caused by voltage applied by a diaphragm voltage driver 2206 . The piezoelectric diaphragm 2204 may be, but is not necessarily, or may not be a piece of piezoelectric material that is bonded to a piece of thin metal substrate. The piezoelectric material changes its dimension via piezoelectricity when a voltage is applied by a diaphragm voltage driver 2206. This change may force the metal substrate to deflect which in turn varies the level of the liquid top surface in the capillary to control the TFPI OPD. The piezoelectric diaphragm 2204 is only an example reservoir space varying apparatus. Alternatives include, without limitation, structures that can controllably deflect, and thus change the top surface 2008A of the liquid by, for example, varying the structure's temperature, or varying a magnetic field applied to the structure.

Referring to the Fig. 16 TMI-based Fourier spectrometer 1600, the Fig. 20 TFPI-based Fourier spectrometer 2000, and to the Fig. 21 and 22 configurations of the TFPI OPD control, various embodiments include a generic tunable interferometer-based Fourier spectrometer. The generic tunable interferometer can be implemented as TMI-based or TFPI-based and examples will be described. One example can include an interferometer that can comprise a first optical path structure providing a first optical path, and a second optical path structure providing a second optical path. Fig. 16 shows first arm 1608 as one implementation of the first optical path and second arm 1610 as one implementation of the second optical path. The Fig. 20 and 21 show, as another implementation of the first arm, a portion of the optical fiber 2004, the terminal or distal portion 2102 thereof and the collimating lens 2106. Fig. 20 and 21 show, as another implementation of the second arm, the same portion of the optical fiber 2004, the terminal or distal portion 2102, the collimating lends 2104, and a gap between the first reflecting surface and a second reflecting surface formed by an upper surface of the liquid, from which reflection R2 is emitted in Fig. 21.

The generic configuration can include the first optical path extending from a first path start to a first reflector, and having a first optical path length, and the second optical path extending from a second path start to a second reflector, and having a second optical path length. According to various embodiments, the generic example configuration of the interferometer can include at least a segment of the second optical path comprising a tunable optical propagation medium and a tuning effectuator, which is configured to receive an optical path difference command and, in response, to effectuate a change in the tunable optical propagation medium that correspondingly changes the optical path difference, which is a difference between the first optical path length and the second optical path length.

Fig. 16 shows second arm fiber 1610, with a metal, electric current heating optical fiber coating 1610A as one implementation of the second optical path. The second arm fiber 1610 is an optical propagation medium and the tuning effectuator can include the metal, electric current heating optical fiber coating 1610A and the controller 1616. As described above, the optical fiber is an optical propagation medium that, when heated by current flow though the optical fiber coating 1610A, correspondingly changes the optical path difference between the first optical path length and the second optical path length. The example generic configuration can include a scan controller, configured to perform a scanning process, comprising generating the optical path difference command and can include an interferometer coupler, configured to receive a subject light, and couple the subject light to the interferometer. In accordance with various embodiments, the above-identified implementations can provide, for example, a propagation of a first portion of the subject light over the first optical path from the first path start to the first reflector, and a propagation from the first reflector, over the first optical path from the first reflector to the first path start, of a first reflector reflection of the first portion of the subject light. Example configurations can also provide propagation of a first portion of the subject light over the first optical path from the first path start, a propagation of a second portion of the subject light along the second optical path from the second path start to the second reflector, and a propagation from the second reflector, over the second optical path from the second reflector to the second path start, of a second reflector reflection of the second portion of the subject light. Implementations can also include a spectrometry logic, coupled to the interferometer in a configuration for receiving and combining the first reflector reflection of the first portion of the subject light and the second reflector reflection of the second portion of the subject light, and generating a spectrometry data for the subject light, based at least in part on a Fourier transform of a result of the combining.

The Fourier spectrometers described above, e.g., in reference to Figs. 16 to 22, can be applied to a wide range of applications in which optical spectrum measurement can be beneficial. The range can include and, because of reductions in cost and improvements in performance obtainable through present embodiments, can extend beyond the present range of applications. The range can include applications in which objects, devices, or processes under measurement are light emitting, in which Fourier spectrometer according to one or more embodiments can be used directly. The range can also include applications requiring characterization of response by a device under test (DUT) to light at different wavelengths. In such applications, interrogators according to or integrating Fourier spectrometers according to one or more of the embodiments described above, e.g., in reference to Figs. 16 to 22, may be used. As an example, Fig. 23 shows a functional block schematic a system 2300 using an interrogator based on the Fourier spectrometer of Fig. 16 system 1600.

Referring to Fig. 23, the light source 2302 may or may not be broadband and may include but is not limited to a light emitting diode (LED), superluminescent diode (SLD), amplified spontaneous emission (ASE) from a pumped erbium doped optical fiber or from a semiconductor optical amplifier (SOA), a multi-longitudinal mode laser, incandescent light bulb or any other type of light source that can emit light with a broadband spectrum. In an aspect, the light source 2302 can be configured to emit broadband light, and can be split into two beams by a first 2x2 directional fiber couple 2304.

In the Fig. 23 configuration one of the two split light beams travels, e.g., by DUT connection fiber 2306 to the DUT. The DUT can be any device whose optical spectral response needs to be measured. On example DUT is a sensor that may have one or multiple interferometric cavities. The cavity reflections SCF from the DUT can propagate back, over the fiber 2306, to the first 2x2 fiber couple 2304, which splits the returned sensor cavity reflections into two paths, one of which may go into the source 2302. This beam going into the source 2302 is not relevant to present description of the system, 2300 and therefore, can be ignored. If desired, in implementations in accordance with Fig. 23, the return sensor cavity reflections can be substantially attenuated, if desired. The attenuation can be provided, for example, by an optical isolator, which permits light to travel in one direction only or, if desired, by replacing the first 2x2 coupler 2304 with an optical circulator. The second of the two beams into which the first 2x2 fiber couple 2304 split the returned sensor cavity reflections can be guided into the TMI 2308, which measures the optical spectrum of the broadband light returned from the DUT.

Reference sensors, such as example reference sensors 2310-A and 2310-B, collectively referenced as "reference sensors 2310," may be added to the other arm of the first fiber coupler 2304, i.e., the arm not connected to the TMI 2308, comprising a tunable arm 2308-A and a reference arm 2308-B. The reference sensors 2310, if used, can be, for example and without limitation, Fabry-Perot (FP) interferometers, fiber Bragg gratings (FBGs), or combinations thereof. The Fig. 23 visible example of the system 2300 shows FP cavity interferometers as reference sensors 2310, and will be referenced accordingly in describing example operations. In an aspect, the respective FP cavity forming each of the reference sensors 2310 may be, but is not necessarily, formed by a pair of broadband partial reflectors inside or outside the fiber. Example methods for fabricating the reference sensors include without limitation, 1) creating a pair of broadband partial reflectors in the fiber such as broadband FBGs, by photo-induced periodic refractive index variation or by point-by-point laser glass damage, 2) creating a pair of glass damage points in the fiber, 3) implementation as an optically transparent glass wafer, and 4) implementation by two cleaved fiber ends separated by an air gap or other transparent medium.

The Fig. 23 population of two reference sensors 2310, or reference interferometers 2310, is only an example. The population can be less than or greater than two. Also, the OPD values of the reference sensors 2310 may be different from any OPD in the DUT and may be different from each other. Also, multiple reference interferometers may be configured in a composite structure, such as comprising more than two partial reflectors that act as references for both the OPD between each adjacent pair of reflectors as well as the OPD between non-adjacent pairs of reflectors. Also, the reference sensors may be FBGs, and their number may be two, or may be more or less than two. According to various embodiments, the reference sensors 2310 or the TMI 2308, or both, may be arranged in a temperature-controlled environment such as the example TEC chamber 2314 as shown in Fig. 23.

The spectral range covered by the Fig. 23 interrogator is dictated by the light source 2302 spectrum and can be changed, e.g., by using a source having a wider spectral width or a broadband spectrum centered at a different wavelength. Also, multiple broadband light sources can be used in place of the single light source 2302, the different sources having different center wavelengths to broaden the spectral coverage.

One of the major applications of the interrogator as shown in Fig. 23 is the demodulation of optical interferometers or any other wavelength modulated devices such as FBGs. In all the sensing applications to be described in this section, the TMI is used as an example for the demodulation of interferometric or wavelength modulated sensors.

It will be understood that Fig. 23 shows a TMI 2308 only for purposes of example. Implementations according to system 2300 can utilize a TMZI or a TFPI in place of the TMI 2308.

As described in the Background above. optical or optical fiber interferometers have been known as a useful for measurement of many physical, chemical and biological quantities. Known configurations include Fabry-Perot, Mach-Zehnder and Michelson interferometers. Various methods are known in the art demodulating an interferometer. One general type, which includes quadrature phase detection, measures changes in the interferometer OPD other than the absolute OPD value. Shortcomings include a requirement for continuous optical phase tracking and loss of historical information when powered off. Another general type of interferometer demodulation absolute OPD measurement and therefore does not require storing interferometer history. One well known example of such techniques is white light interferometry. Measurements using this method use either a combination of a tunable laser and a photodetector or a combination of a broadband source and an optical spectrometer. For academic interest, examples are described in United States Patent No. U.S. Patent 9,804,033 B2. In uses of whitelight interferometry, the OPD value can be deduced from the optical spectrum.

Known technical difficulties in designing singlemode optical fiber whitelight interferometers include selection of the operating wavelengths and selection of the spectrum measurement devices. For spectrum measurement, a broadband light source centered at a wavelength below 1µm is often preferred because of a general availability of affordable availability of silicon CCD or CMOS detector array based optical spectrometers. However, singlemode fiber and fiber components, such as couplers and circulators, for wavelengths in this spectral range can be very expensive compared to such components for telecommunication wavelengths such as 1310nm and 1550nm. In addition, telecommunication fibers and fiber components are generally low cost. However, in current known techniques for whitelight interferometry, the lower cost of single mode fiber and fiber components, e.g., coupler s and circulators, is not able to be exploited. A major reason is that spectrometers, such as InGaAs photodiode array-based device, which can work for wavelengths greater than 1300nm and offer desired performance, e.g., in sensitivity and wavelength resolution, can be cost prohibitive for many practical applications.

Embodiments according to the present disclosure provide solutions to these problems, and for demodulating signals of a variety of interferometric and wavelength modulated sensors.

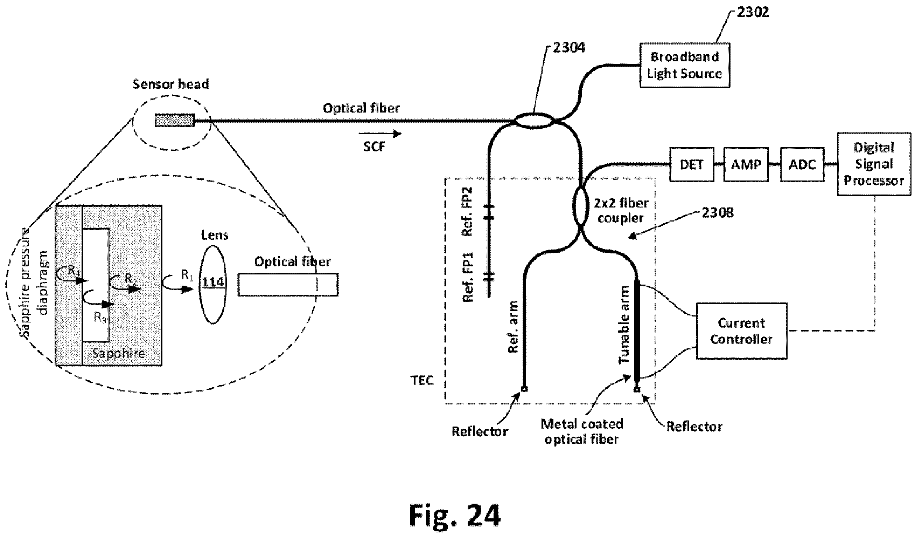

One example sensor system based on an interferometric sensor is shown in Fig. 24. Here the interferometric sensor is the DUT in Fig. 23.

In operation the light from the interrogator travels to a sensor that may have a single or multiple interferometric cavities. The example shown is a sapphire-based sensor with multiple interferometric cavities, which produce 4 first order reflections from the 4 air-sapphire interfaces. Each reflection is approximately 7% so each cavity could be approximated as a two-beam interference with the higher order reflections neglected. The sensor may have less or more interferometric cavities. The cavities can be made of any combination of transparent materials, or even vacuum, with a mismatch of refractive indices, and reflective coatings for enhanced reflectance may or may not be added at some interfaces. The cavities also do not necessarily need to be approximated as two beam interference. The light out of the input fiber may or may not be collimated. The light travels through each of the cavities and approximately 7% of the incident power is reflected at each air-sapphire interface. These reflections propagate back to the interrogator where the light spectrum is measured by the TMI via Fourier transform spectrum analysis. Based on the measured optical spectrum, the OPD of some or all of sensor interferometric cavities can be demodulated.

Besides whitelight interferometry for absolute OPD measurement, another representative method for absolute OPD measurement is OPD matching. This method usually involves the use of a broadband light source and a local interferometer that has a varying OPD. Optical interference occurs only when the difference between the local interferometer OPD and the sensor OPD falls within the coherence length of the source. The controlled variation of the local interferometer OPD is often realized either by a linear actuator [T. Li, A. Wang, et al., "Optical scanning extrinsic Fabry-Perot interferometer for absolute microdisplacement measurement," Appl. Opt., 36, 8858, 1997 and C. E. Lee, H. F. Taylor, "Fiber-optic Fabry-Perot temperature sensor using a low-coherence light source," J. Lightwave Tech. 129-134, 1991] or by an optical element, such as an optical wedge, that generates a spatially dispersed OPD distribution [C. Belleville, G. Duplain, " White-light interferometric multimode fiber-optic strain sensor," Opt. Lett. 78, 1993]. The actuator-based OPD scanning technique can be applied to any operating wavelength, but systems capable of performing the techniques are usually bulky and expensive. The optical wedge method is usually for wavelengths below 1µm where low cost and high-performance silicon CCD or CMOS arrays can be applied. However, optical fiber and fiber components such as couplers and circulators for shorter wavelengths are expensive. In contrast, fiber and components for wavelengths longer than 1300nm are low cost owing to the high demand of fiber telecommunication.

The interrogator shown in Fig. 23 also permits demodulation of some or all of sensor interferometric cavities based on OPD matching between each sensor cavity to be measured and the TMI OPD.

Fig. 24 shows an example application of the Fig. 23 interrogator to an example sensor head, which for purposes of description is shown implemented by the system 100 sensor head 110 and its FP cavity body 112. Operations will be described in reference to reflection signals R2 and R3, from the second reflection surface SC2 and third reflection surface SC3, respectively, of the FB cavity body 112. It is to be understood that R2 and R3 are only for purposes of example, and that interference can be used to determine the OPD differences using any other pair of two reflections, whether adjacent or not, e.g., R1-R2, R3-R4, and R1-R4.

In an operation, R2 and R3 enter the TMI 2308, and their combination is split into a first portion that enters the reference arm 2308B and a second portion that enters the tunable arm 2308A and then reflected at the arms' respective fiber ends. At the photodetector, the TMI converts R2 and R3 into four electromagnetic waves, including ${E}_{2}^{R}$ and ${E}_{3}^{R}$ reflected from the reference arm and ${E}_{2}^{T}$ and ${E}_{3}^{T}$ from the tunable arm. Since only differential phases between these waves are relevant in the detected light intensity in this example, the four electromagnetic waves can be expressed as ${E}_{2}^{R} = {E}_{0} cos \left(ωt\right)$ ${E}_{3}^{R} = {E}_{0} cos \left(ωt+{φ}_{3}\right)$ ${E}_{2}^{T} = {E}_{0} cos \left(ωt+Δφ\right)$ ${E}_{3}^{T} = {E}_{0} cos \left(ωt+{φ}_{3}+Δφ\right)$ Here we have assumed all the four waves to have the same amplitude and that we can ignore polarization effects for the sake of simplicity of discussion without losing the discussion generality and conclusion validity. The detected optical intensity *I* can be obtained as $I = \left〈{\left|{E}_{2}^{R}+{E}_{3}^{R}+{E}_{2}^{T}+{E}_{3}^{T}\right|}^{2}\right〉$ Given the short coherence length of the broadband light source, effective optical interference occurs only between waves that have an OPD comparable to the source coherence length. For example, for a source that has a spectral bandwidth of 100nm centered at 1550nm, the coherence length L*_{c}* is estimated to be only 24µm. Since light travels twice in each reflective interferometric cavity, an OPD of 12um or smaller can give strong interference. If the OPD as defined by R2 and R3 is much greater than L*_{c}*, then no effective optical interference occurs unless the OPD as represented by |*φ*₃ - Δ*φ*| becomes comparable to or falls within L*_{c}*. This means that strong optical interference can be observed if the TMI OPD is scanned across |*φ*₃ - Δ*φ*| = 0.

Here as an example, the two reference FP interferometers are designed to have their OPD values smaller and greater than the OPD as defined by R2 and R3 and these OPDs are sufficiently different from one another so that the interference fringes from each interferometric cavity can be distinguished from the others without crosstalk. Again, the reference sensors may be FBGs, and their number may be more or less than two.

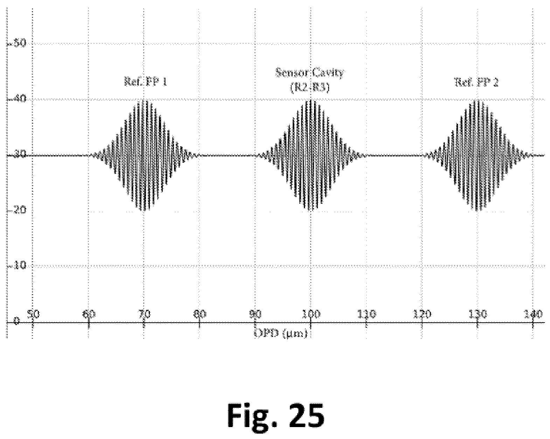

Fig. 25 presents an example photodetector output as the TMI OPD is scanned to cover all the OPDs of the reference FPs and the sensor OPD. In the simplest case of signal processing, the signals such as the peak position of the envelope of the interference fringes from each reference FP permits accurate calibration for the determination of the sensor OPD. Again, more than two reference FPs may be used to correct possible nonlinear scanning of the tunable fiber OPD.

If the sensor has multiple interferometric cavities formed by more than two reflections, then their OPDs can be accurately measured by designing the TMI OPD tuning range to cover all the sensor OPDs to be measured. This may allow simultaneous measurement of multiple parameters. Taking the sensor structure in Fig. 24 as an example, the monolithic sapphire sensor structure produces multiple reflections from each sapphire-air interference including R1, R2, R3 and R4. The sapphire diaphragm deflects when a pressure is applied to the sapphire diaphragm and the deflection in turn changes the hollow cavity between R2 and R3. The hollow cavity OPD may also exhibit temperature dependence due to material thermal expansion and the thermal dependence of the diaphragm material characteristics such as its Young's modulus. However, the sapphire cavity OPDs formed by R1-R2 and R3-R4 may be temperature sensitive only so the measurement of some or all of the OPDs may offer measurement of pressure and temperature at the same time.

The sensor OPD measurement may not be high speed. However, the TMI or the interrogator as described above may be combined with the invention as described in the Provisional Application (filed on January 6, 2021 with Application Number of 63134573, hereinafter "the '573 Provisional Application") to achieve both quasi-static and dynamic measurements at the same time. There are numerous embodiments in the '573 Provisional Application. Any of them in combination with the tunable MI may offer the quasi-static and dynamic measurement capabilities.

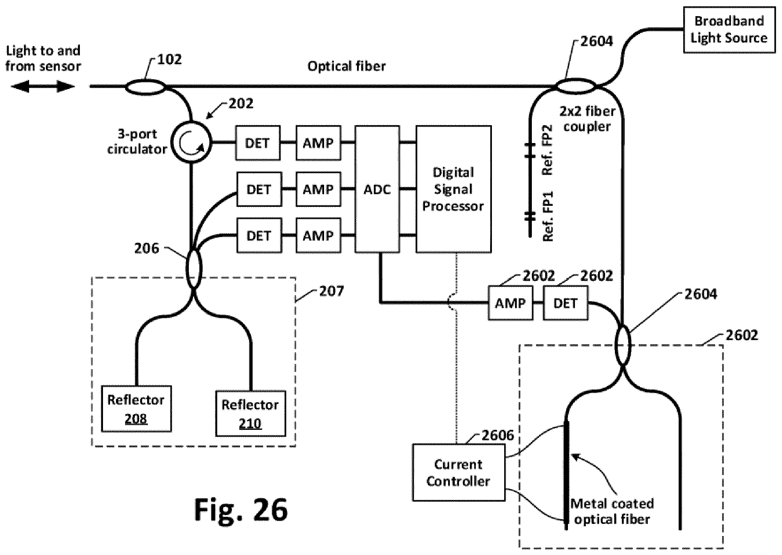

One example arrangement is shown in Fig. 26, which shows a functional block schematic of one example system 2600 for both quasi-static and dynamic measurements in accordance with various embodiments, combining an example interrogator according to various embodiments such as shown by the example in Fig. 23, and an example Michelson interferometer configuration sapphire cavity, coupler-based fiber optic pressure sensor according to embodiments such as shown by the example in Fig. 1 and Fig. 2.

Referring to Fig. 26, the broadband light reflected from a sensor that may have one or multiple interferometric cavities enters a second Michelson interferometer (MI) 207 beside the interrogator as shown in Fig. 23. In addition to the TMI (MI1) 2602, the second MI (MI2) 207 which is formed by a symmetric 3x3 fiber coupler and its two arms have an OPD similar to a sensor OPD such as the one formed by R2 and R3, for measuring with a high speed or high frequency response. In this case, the difference between MI2 207 OPD and the sensor OPD to be measured may or may not be smaller than L_{c}. Any changes including rapid variations in the sensor OPD will produce changes in the optical powers at the three photodetectors and the power changes are 120 degrees apart between any two of the three signals. Because of the three signals being separated by 120 degrees, the sensor OPD can be accurately determined. Although this measurement is high speed, it is a dynamic measurement and therefore relies on the sensor OPD historical information. When the sensor system is shut down and turned back on, this MI2 cannot determine the absolute value of the sensor OPD. Therefore, this measurement is relative and requires continuous interference monitoring to determine the sensor OPD changes.

In contrast, the TMI 2602 MI1 offers measurement of the absolute sensor OPDs and does not require information about sensor OPD past changes. This measurement is thus absolute. Accordingly, the two MIs offer not only quasi-static sensor OPD measurement but also dynamic sensor OPD monitoring.

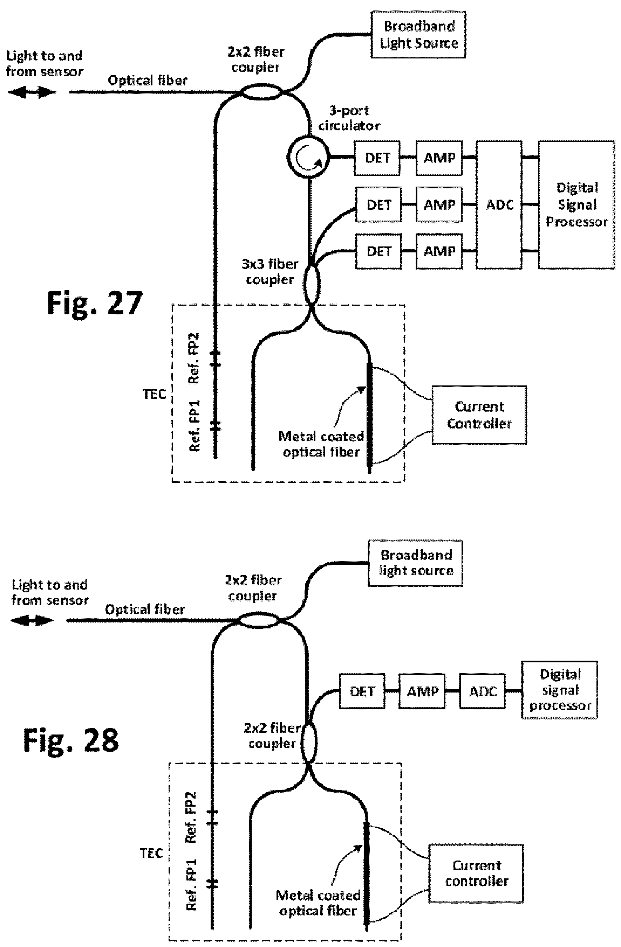

Another embodiment of the present invention is to combine sensor quasi-static and dynamic measurement capabilities in one MI as explained in Fig. 27, which shows a functional block schematic of one example system for both quasi-static and dynamic measurement in accordance with various embodiments, using one Michelson interferometer.

Referring to Fig. 27, MI is based on a M x N fiber coupler where M and N are no less than 2. Here a 3x2 or 3x3 coupler is used as an example. The coupler may or may not be symmetric or equal input power splitting. The TMI and the reference interferometers may or may not be placed in a temperature-controlled environment or chamber. For quasi-static measurement of sensor OPDs, the TMI OPD is tuned to sufficiently large range to cover all the sensor OPDs to be measured. This TMI OPD scanning may or may not be repetitive or periodic. When dynamic measurement of a sensor OPD is needed, the MI OPD is tuned to be a value similar to the sensor OPD. Similar here is defined as the difference between the sensor OPD and the TMI OPD to be comparable to or smaller than L_c. Any change in the sensor OPD may produce changes in the output of one, two or all the photodetectors for high-speed OPD measurement.

The 3x2 fiber coupler in Fig. 27 may be replaced with a 2x2 fiber coupler as illustrated in Fig. 28, which shows a functional block schematic of another example system for both quasi-static and dynamic measurement in accordance with various embodiments. The Fig. 28 system uses one Michelson interferometer with an example alternative configuration, replacing an M x N fiber coupler in the Fig. 27 example with an M x M fiber coupler. The quasi-static sensor OPD measurement is the same as in the system given in Fig. 27. For high-speed sensor OPD measurement, the TMI OPD may be tuned to satisfy two conditions at the same time so the quadrature phase detection method can be applied. One is that the TMI OPD is similar to or within *L_{c}*. The second condition is to satisfy Equation (9) $\frac{\left|{OPD}_{sensor}-{OPD}_{TMI}\right|}{λ} = N \pm \frac{1}{4}$ where *λ* is the light center wavelength in vacuum and N is an integer.

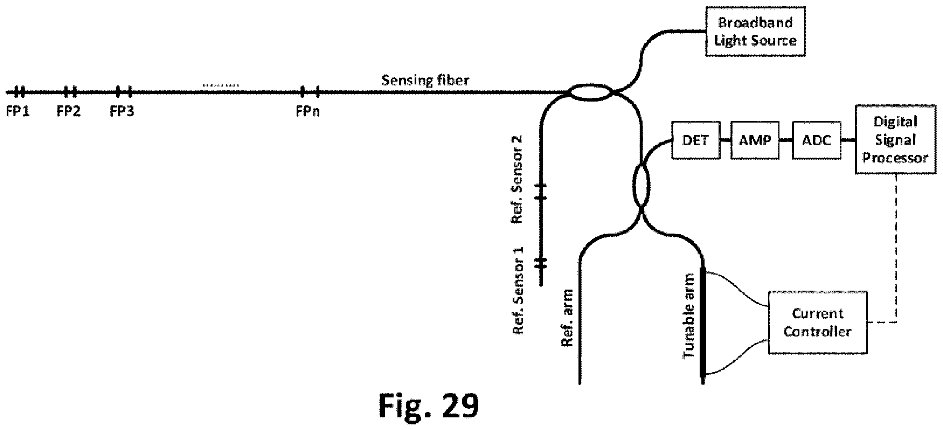

Besides the demodulation of a single interferometric sensor, the TMI can also be utilized to demodulate multiple interferometric sensors which may be on one fiber or on different fibers. Fig. 29 presents one example of serial FP sensors on single optical fibers, for both quasi-static and dynamic measurement using a serial arrangement of multiple FP sensors, in accordance with various embodiments. Each FP sensor in the Fig. 29 system may or may not be formed by a pair of FBGs, which may be fabricated by photo induced refractive index change or by a point-by-point method based on pulse laser induced glass damage, or by a pair of glass damage points in the fiber core or cladding.

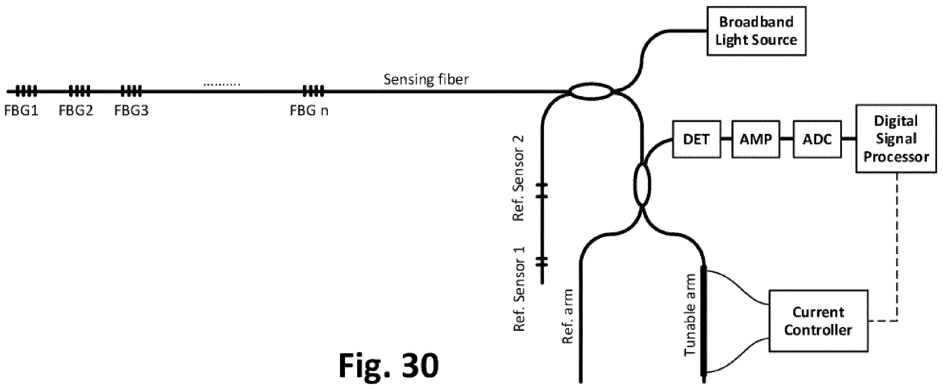

The TMI can also be applied to demodulate FBGs. Regarding the FBGs per demodulation of FP sensors described in reference to Fig. 29, the Fig. 30 FBGs may be on one fiber or be on different fibers. Fig. 30 present the example of serial FBGs on one fiber. These FBGs may be, but are not necessarily fabricated by photo induced refractive index change or by a point-by-point method based on pulse laser induced glass damage.

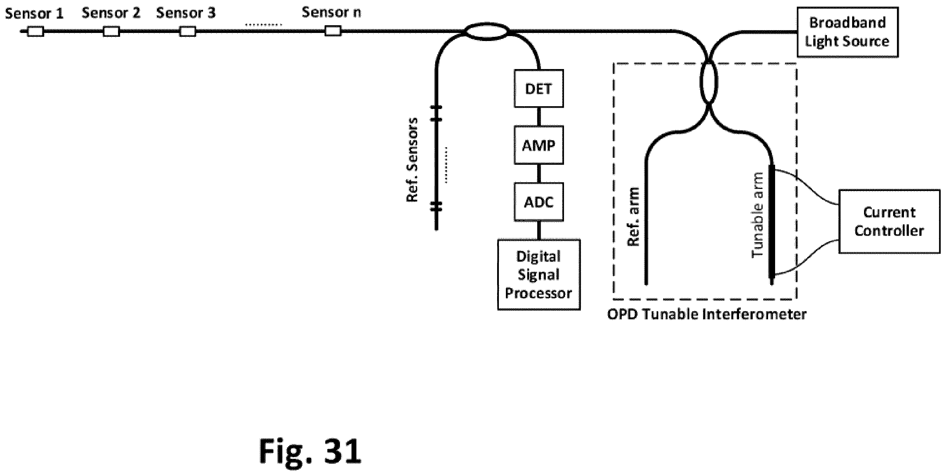

The TMI in the systems shown in Figs. 29 and 30 may be replaced by any of the other tunable interferometers or Fourier spectrometers of the above-described embodiments. In the systems in Figs. 29 and 30, the light reflected from the sensors goes through the TMI and is then detected. The TMI or any tunable interferometer as stated previously can also be positioned before the light injection into the sensing fiber as illustrated in Fig. 31. Referring to Fig. 31, sensor 1 through sensor n may be FP interferometers, FBGs, or any other type of sensors whose reflection optical spectrum changes in response to a measurand, which may include but is not limited to temperature, strain and pressure. One, two or more than two reference sensors may be used for real-time calibration of the TMI tuning. These reference sensors may include but are not limited to FBGs, which may have different center or Bragg wavelengths, and FP cavities that may have different OPDs from the OPDs of the FP sensors in the sensing fiber.

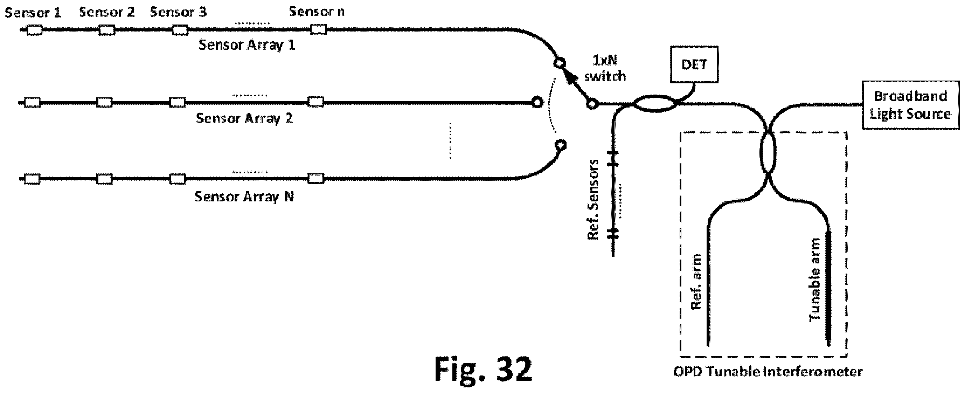

A distributed sensing network that contains multiple sensing fibers and each sensing fiber may comprise one or multiple sensors can also be formed as shown in Fig. 32. Like the sensing fiber in Fig. 31, each sensing fiber may contain one, or multiple sensors, having the same or different type. The types may include but are not limited to FP interferometers and FBGs. Different sensing fibers may or may not have the same number or same type of sensors and may also different sensor spacings and sensing fiber lengths. One or multiple reference sensor may or may not be connected to a sensing fiber through a 2x2 fiber coupler. Some or all 2x2 fiber couplers on the sensing fibers may or may not be replaced by 1x2 fiber couplers or 3-port fiber circulators.

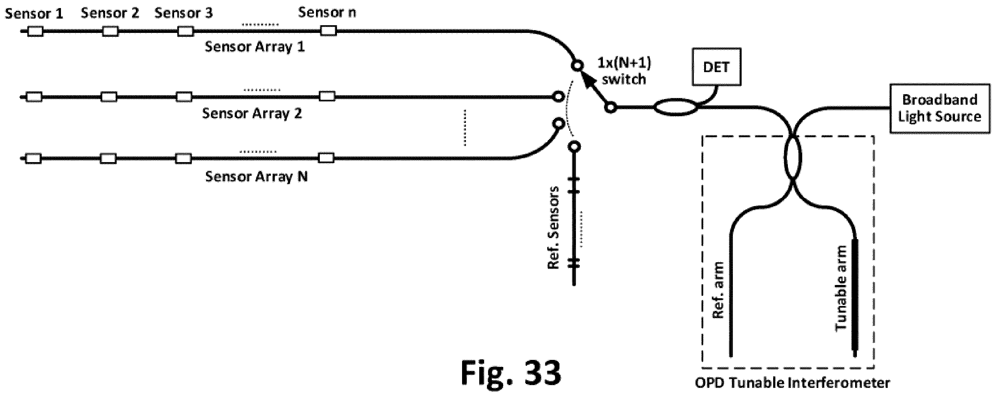

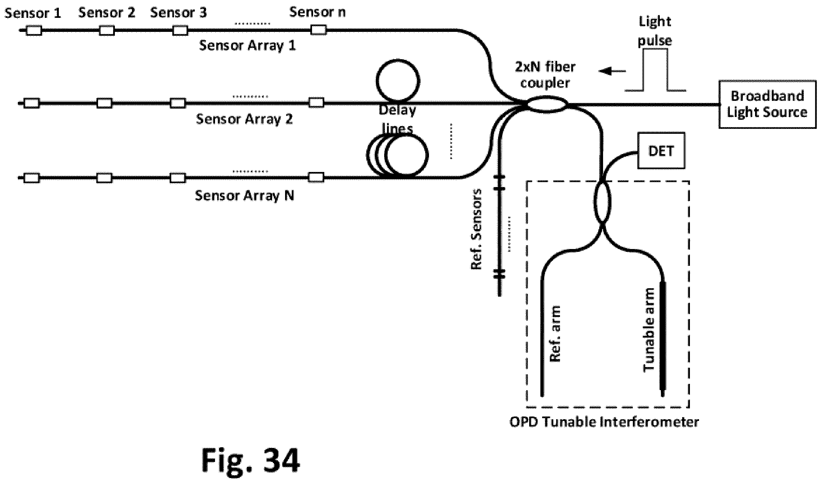

The 1xN fiber coupler may be replaced by a 1xN or 1x(N+1) fiber switch as illustrated by examples in Figs. 33 and 34. The fiber switch permits the interrogation of the multiple sensing fibers one after another in time. The reference sensors may be connected to a 2x2 fiber coupler as given in Fig. 33 or to the fiber switch as presented in Fig. 34.

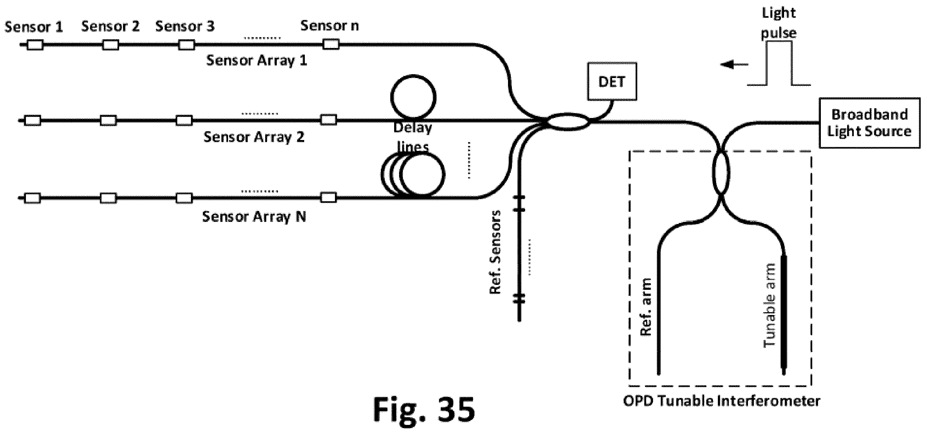

Multiple sensing fibers may be interrogated by time division multiplexing (TDM) as illustrated in Fig. 35. The output power of the broadband light source is modulated in time. The power modulation may include but is not limited to an optical pulse generation or sinusoidal power modulation with a varying frequency in time. Here source pulse generation is used just as an example to explain the TDM principle of operation.

The light pulse is split into the multiple sensing fibers. Each sensing fiber that comprises multiple sensors at different locations along the fiber reflects in part the incident pulse, so a reflection pulse sequence is produced. The light pulse width may or may not be smaller than the time interval between reflections of neighboring sensors. Different sensing fibers have different lengths of delay lines. The differences between these delay line lengths are designed to be long enough such that reflections from different sensing fibers can be distinguished in time at the photodetection.

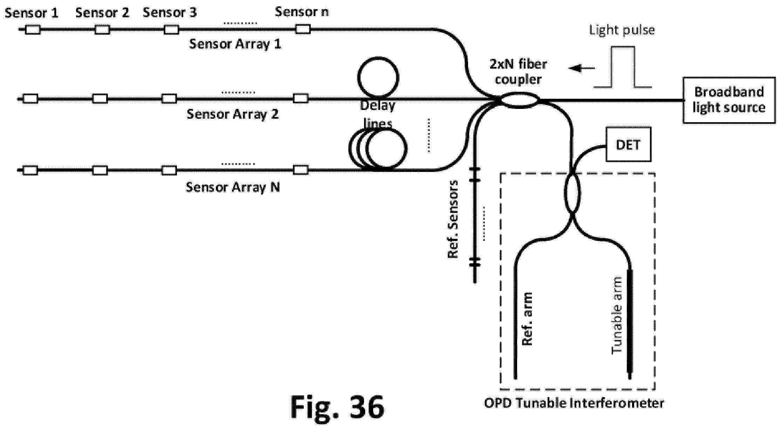

Unlike the system in Fig. 35 where the TMI is inserted between the source and the sensing fiber, the TMI may also be positioned to the detector end as shown in Fig. 36.

It will be understood that sensor arrays in the sensor system examples presented in Figs. 29-36 may or may not be the same in terms of, for example, sensor type, sensor quantity, adjacent sensor spacing and sensor array length. The sensors in the sensor arrays in the Fig. 29-36 sensor system examples can be FP interferometers, FBGs, any other sensors that can change their reflection optical spectrum in response to changes in any physical or chemical quantity referred to as a measurand. Example measurands for which sensor system examples presented in Figs. 29-36 can be configured include temperature, strain, and pressure. Also, examples according to various embodiments of sensor systems as described in reference to Figs. 29-36, and examples of configurations, adaptations, and reductions thereof that are within the scope of one or more of the appended claims can include a reference sensor or reference sensors, and other examples can omit reference sensors. Like the ones in the system in Fig. 23, the reference sensors may be FP interferometers or FBGs or any of their combinations. The reference sensors used in each sensing system may be one, two or more than two. In the case of FP reference interferometers and FP sensor arrays, the OPD of each reference FP cavity may be smaller or greater than the OPD of any FP sensors in the sensing fiber.

The reference sensors may or may not be placed in a temperature-controlled environment such as in an enclosure or chamber where the temperature is controlled by a thermoelectric cooler (TEC). Alternatively the reference sensors may be designed or packaged to be intrinsically temperature insensitive so that the OPD of a reference FP sensor or the center of a reference FBG are minimally affected by ambient temperature variations. For example, a reference sensor may be packaged in a material or a set of materials that offer desired thermal expansion characteristics so that the reference sensor OPD or Bragg wavelength is minimally affected by ambient temperature changes. This method is known as athermal packaging and may be realized by embedding a reference sensor in carefully chosen materials or by fiber coatings.

If the light in a reference sensor exits the fiber and propagates across an air gap before its re-entrance into the same or different fiber, the light may or may not be collimated by a lens of any type which may include but is not limited to conventional lenses that have concave or convex surfaces or cylindrical lenses that operate on a graded index distribution.

In embodiments such as the examples in Figs. 29-36 tunable interferometers may be any tunable interferometer shown in or described as included in, or as optional to include in any embodiment described in reference to any other figure of this disclosure. In various embodiments, such tunable interferometers can be or can include, but are not limited to, TMIs, TMZIs, or TFPIs, and combinations and sub-combinations therefore..

Optical fiber in the present invention may be singlemode, few-mode or multimode optical fiber. The fiber may have hollow or solid core and the core or cladding of the fiber may be made of an optically transparent solid material such as a glass and a polymer or made of an optically transparent liquid whose index of refraction or volume may or may not exhibit a significant dependence on temperature chances. The tunable arm optical fiber in any TMI or TMZI may or may not have a standard cladding diameter such as 125mm. The cladding diameter may or may not be reduced to increase the scanning speed of the tunable arm. Intermedium layer(s) between the metal resistive coating and the optical fiber cladding may be utilized to improve the surface adhesion of the metal resistive coating to the optical fiber. The reference arm of each OPD tunable interferometer may or may not be the same as the tunable arm fiber.

It is noted that, as used herein and in the appended claims, the singular forms "a", "an", and "the" include plural referents unless the context clearly dictates otherwise. It is further noted that the claims may be drafted to exclude any optional element. As such, this statement is intended to serve as support for the recitation in the claims of such exclusive terminology as "solely," "only" and the like in connection with the recitation of claim elements, or use of a "negative" limitations, such as "wherein [a particular feature or element] is absent", or "except for [a particular feature or element]", or "wherein [a particular feature or element] is not present (included, etc.)...".

Where a range of values is provided, it is understood that each intervening value, to the tenth of the unit of the lower limit unless the context clearly dictates otherwise, between the upper and lower limit of that range and any other stated or intervening value in that stated range, is encompassed within the invention. The upper and lower limits of these smaller ranges may independently be included in the smaller ranges and are also encompassed within the invention, subject to any specifically excluded limit in the stated range. Where the stated range includes one, or both limits, ranges excluding either or both of those included limits are also included in the invention.

As will be apparent to those of skill in the art upon reading this disclosure, each of the individual embodiments described and illustrated herein has discrete components and features which may be readily separated from or combined with the features of any of the other several embodiments without departing from the scope of the present invention. Any recited method can be carried out in the order of events recited or in any other order which is logically possible.

The invention is defined by the appended claims.

## Claims

1. A method for measuring at least pressure, acceleration, strain, or temperature, comprising:
injecting a light in a manner providing successive incidence with a sensor first reflecting surface and a sensor second reflecting surface, supported by structure that, responsive to changes in the pressure, acceleration, strain, or temperature, or combinations or sub-combinations thereof, changes a sensor optical path distance between the first reflecting surface and the second reflecting surface;
receiving sensor reflections (RX), comprising reflections of the injected light from the first reflecting surface, and reflections of the injected light from the second reflecting surface;
routing the sensor reflections (RX) to an interferometer that includes a first optical path, having a first optical path length, starting at a first optical path start and ending at a first reflector (126), and includes a second optical path, having a second optical path length, starting at a second optical path start and ending at a second reflector (128);
propagating the sensor reflections (RX) within the interferometer, comprising propagating a first portion (RX1) of the sensor reflections (RX) along the first optical path to incidence with the first reflector (126), propagating a second portion (RX2) of the sensor reflections (RX) along the second optical path to incidence with the second reflector (128), propagating first reflector reflections of the first portion (RX1) of the sensor reflections (RX), along the first optical path, to the first optical path start, and propagating second reflector reflections of the second portion (RX2) of the sensor reflections (RX), along the second optical path, to the second optical path start;
phase shifting splitting a combination of the first reflector reflections of the first portion (RX1) of the sensor reflections (RX) and the second reflector reflections of the second portion (RX2) of the sensor reflections (RX) into separate channel signals, comprising first channel signals, second channel signals, and third channel signals, mutually spaced from another with respect to phase; and
computerized measuring of the pressure, acceleration, strain, or temperature, or combinations or sub-combinations thereof, including computerized detecting of changes in the sensor optical path difference, based on the first channel signals, second channel signals, and third channel signals.

2. The method of claim 1, wherein the phase shift distributing is configured to space the first channel signals, second channel signals, and third channel signals uniformly by 120 degrees.

3. The method of claim 1, wherein the computerized measuring of the pressure, acceleration, strain, or temperature, or combinations or sub-combinations thereof is configured to perform dynamic measuring of a pressure, acceleration, strain, or temperature on the sensor cavity body.

4. The method of claim 1, wherein:
the first reflecting surface is an interface between a surface of a cylinder base and a hollow cavity, and the second reflecting surface is an interface between the hollow cavity and a surface of a cap that is attached to the cylinder base, the first reflecting surface being spaced from the second reflecting surface by a hollow cavity optical path distance; and
the second optical path length differs from the first optical path length by an optical path difference that is equal to or near equal to the hollow cavity optical path difference.

5. The method of claim 4, wherein
the first optical path includes a first optical fiber, extending a first optical fiber length to a first optical fiber distal end,
the second optical path includes a second optical fiber, separate from the first optical fiber, and extending a second optical fiber path length to a second optical fiber distal end,
the first reflector (126) is positioned at the first optical fiber distal end, and
the second reflector (128) is positioned at the second optical fiber distal end.

6. The method of claim 4, wherein
propagating the first portion (RX1) of the sensor reflections signal together with the second portion (RX2) of the routed reflection signal along an optical fiber segment (304) having a segment length, the segment length corresponding to the first optical path length;
reflecting the first portion (RX1) of the routed sensor reflection signal from the first reflector (126)
propagating the second portion (RX2) of the routed sensor reflection signal through the first reflector (126) and along an extending optical path to the second reflector (128); and
reflecting the second portion (RX2) of the routed sensor reflection signal from the second reflector (128), wherein
the extending optical path has an optical path extension length that, summed with the segment length, corresponds to the second optical path length,
wherein in particular the method further comprising:
tapping a portion of the sensor reflection signals, as tapped sensor reflection signals; and
performing a computerized absolute measuring of the pressure, acceleration, or strain, comprising computerized absolute measuring of the hollow cavity optical path difference, based on the tapped sensor reflection signals.

7. The method of claim 4, wherein:
the sensor optical path includes cavity body first reflecting surface, a cavity body second reflecting surface, a cavity body third reflecting surface, and a cavity body fourth reflecting surface, the cavity body first reflecting surface being an outer surface of the cylinder base on which the injected light is first incident, the cavity body second reflecting surface is the hollow cavity first facing surface, the cavity body third reflecting surface is an inner face of the cap and is the hollow cavity second facing surface, and the cavity body fourth reflecting surface is an outward facing surface of the cap; and
the method further comprises:
tapping a portion of the sensor reflection signals, as tapped sensor reflection signals, and
performing an absolute measuring of a temperature and a pressure, comprising an absolute measuring of at least one optical path difference within the sensor cavity body, between the cavity body first reflecting surface and the cavity body second reflecting surface, between the cavity body second reflecting surface and the cavity body third reflecting surface or between the cavity body third reflecting surface and the cavity body fourth reflecting surface.

8. The method of claim 6, wherein the absolute measuring of at least one optical path difference within the sensor cavity body comprises a Fourier optical spectrometry process, wherein in particular the Fourier optical spectrometry process includes:
routing the tapped sensor reflection signals into a tunable interferometer, comprising a tunable arm and a reference arm;
summing output signals from the tunable interferometer, which are responsive to the tapped sensor reflection signals, and generating an interference signal based on the summing; and performing a computerized Fourier transform of the interference signal.

9. The method of claim 6 or 8, wherein the absolute measuring of at least one optical path difference within the sensor cavity body comprises routing the tapped sensor reflection signals to a slab interferometer and detecting, by an image sensor array, outputs from the slab interferometer and/or
wherein the absolute measuring of at least one optical path difference within the sensor cavity body comprises routing the tapped sensor reflection signals to an optical spectrometer and generating the absolute measure based on a Fourier spectrometry result that is output by the optical spectrometer and/or
wherein the absolute measuring of at least one optical path difference within the sensor cavity body comprises:
routing the tapped sensor reflection signals to a tunable optical bandpass filter;
identifying, by a tuning of the tunable optical bandpass filter, spectral components of the tapped sensor reflection signals; and
based on the identified spectral components, generating the absolute measure of the at least one optical path difference.

10. The method of claim 6, 8 or 9, wherein the absolute measuring of at least one optical path difference within the sensor cavity body comprises:
routing the tapped sensor reflection signals to a slab interferometer, which has a slab optical path difference;
determining, from photodetector outputs of the slab interferometer, peak positions of fringes envelopes;
identifying, from the peak positions of fringes envelopes, matchings of the slab optical path difference .

11. A system for measuring at least pressure, acceleration, strain, or temperature, comprising:
a sensor cavity body, configured to receive an injection light and to provide an injection light optical path for the injected light that includes a hollow cavity first facing surface and a hollow cavity second facing surface, and configured such that changes in the force change a hollow cavity optical path difference between the hollow cavity first facing surface and the hollow cavity second facing surface;
a splitter-router, configured to:
receive a sourced light from a light source,
route the sourced light as the injected light, over an optical fiber to the sensor cavity body,
receive from the sensor cavity body sensor reflection optical signals, which are responsive to the injected light and comprise hollow cavity first reflection signals from the hollow cavity first facing surface and hollow cavity second reflection signals from the hollow cavity second facing surface, and
route at least a portion of the cavity body sensor reflection signals, as routed cavity body reflection signals;
an interferometer, configured to:
receive the routed cavity body reflection signals,
propagate the routed cavity body reflection signals such that a first portion (RX1) of the routed cavity body reflection signals arrives, via a first optical path, at a first reflector (126) and a second portion (RX2) of the routed cavity body reflection signals arrives, via a second optical path, at a second reflector (128),
reflect from the first reflector (126) a portion of the routed sensor reflection signals, as interferometer first reflector signals, and reflect from the second reflector (128) of another portion of the routed sensor reflection signals, as interferometer second reflector signals;
a phase shifting splitter, configured to:
receive and combine, into interferometer reflector signals, the interferometer first reflector signals and the interferometer second reflector,
separate the interferometer reflector signals into separate channel signals, comprising first channel signals, second channel signals, and third channel signals, mutually spaced from one another with respect to phase; and
a computer implemented dynamic measuring logic, comprising a processor (138) coupled to a data memory (144) and an instruction memory (146), the instruction memory storing processor executable instructions that cause the processor (138) perform the logic to detect changes in the hollow cavity optical path difference, based on the first channel signals, second channel signals, and third channel signals.

12. The system of claim 11, wherein the phase shifting splitter is further configured to space the first channel signals, second channel signals, and third channel signals uniformly by 120 degrees
or
wherein the computer implemented dynamic measuring logic is further configured to perform the dynamic measuring of a pressure or acceleration on the sensor cavity body
or
wherein the interferometer is further configured to perform dual path propagating of the routed sensor reflection signals, the dual path propagating including:
propagating a first portion (RX1) of the routed sensor reflection signals to the first reflector (126), along a first optical propagation path having a first optical path length,
propagating a second portion (RX2) of the routed sensor reflection signals to the second reflector (128), along a second optical propagation path having a second optical path length,
wherein the second optical path length differs from the first optical path length by an optical path difference equal to or near equal to the hollow cavity optical path difference,
wherein in particular:
the first optical propagation path includes a first optical fiber, extending a first optical fiber length to a first optical fiber distal end,
the second propagation path includes a second optical fiber, separate from the first optical fiber, and extending a second optical fiber path length to a second optical fiber distal end,
the first reflector (126)is positioned at the first optical fiber distal end, and
the second reflector (128) is positioned at the second optical fiber distal end
wherein in particular the dual path propagating includes:
propagating the first portion (RX1) of the routed sensor reflection signal together with the second portion (RX2) of the routed reflection signal along an optical fiber segment having a segment length, the segment length corresponding to the first optical path length;
reflecting the first portion (RX1) of the routed sensor reflection signal from the first reflector (126);
propagating the second portion (RX2) of the routed sensor reflection signal through the first reflector (126) and along an extending optical path to the second reflector (128); and
reflecting the second portion (RX2) of the routed sensor reflection signal from the second reflector (128), wherein
the extending optical path has an optical path extension length that, summed with the segment length corresponds to the second optical path length.
or
further comprising:
a tapping logic, configured to tap a portion of the sensor reflection signals, as tapped sensor reflection signals; and
a computer implemented logic for performing a computerized absolute measuring of the at least pressure, acceleration, strain, or temperature, comprising computerized absolute measuring of the hollow cavity optical path difference, based on the tapped sensor reflection signals.

13. The system of claim 11, wherein:
the sensor cavity body includes a cap bonded to open end of a cylinder base, in a configuration sealing the hollow cavity, and the injection light optical path includes cavity body first reflecting surface, a cavity body second reflecting surface, a cavity body third reflecting surface, and a cavity body fourth reflecting surface, the cavity body first reflecting surface being an outer surface of the cylinder base on which the injected light is first incident, the cavity body second reflecting surface is the hollow cavity first facing surface, the cavity body third reflecting surface is an inner face of the cap and is the hollow cavity second facing surface, and the cavity body fourth reflecting surface is an outward facing surface of the cap; and
the system further comprises
a tapping logic, configured to:
tap a portion of the sensor reflection signals, as tapped sensor reflection signals, prior to the dual optical path propagating by the interferometer, and
perform an absolute measuring of a temperature, comprising an absolute measuring of at least one optical path difference within the sensor cavity body, the at least one optical path difference being from among optical path difference between the cavity body first reflecting surface and the cavity body second reflecting surface, optical path difference between the cavity body second reflecting surface and the cavity body third reflecting surface, and the optical path difference between the cavity body third reflecting surface and the cavity body fourth reflecting surface,
wherein in particular the absolute measuring of at least one optical path difference within the sensor cavity body comprises performing a Fourier optical spectrometry process,
wherein in particular the Fourier optical spectrometry process includes:
routing the tapped sensor reflection signals into a tunable interferometer, comprising a tunable arm and a reference arm;
summing output signals from the tunable interferometer, which are responsive to the tapped sensor reflection signals, and generating based on the summing an interference signal;
performing a computerized Fourier transform of the interference signal.

14. The system of claim 13, wherein the absolute measuring of at least one optical path difference within the sensor cavity body comprises routing the tapped sensor refection signals to a slab interferometer and detecting, by an image sensor array, outputs from the slab interferometer.

15. The system of claim 11, wherein the sensor cavity body is a first sensor cavity body, the injection light optical path is a first sensor cavity body light path, the hollow cavity first facing surface is a first hollow cavity first facing surface, the hollow cavity second facing surface is a first hollow cavity second facing surface, and the cavity body reflection signals are first cavity body reflection signals, and the system further comprises:
a series connection of a first reference sensor and a second reference sensor, coupled to the optical splitter-router;
a second sensor cavity body, coupled to the first sensor cavity body to receive and to provide a second sensor cavity body optical light path for a portion of the injection light that passes through the first sensor cavity body, the second optical light path including a second hollow cavity first facing surface and a second hollow cavity second facing surface, configured such that changes in a force change a second hollow cavity optical path difference between the second hollow cavity first facing surface and the second hollow cavity second facing surface, wherein
the second sensor cavity body is configured to receive the portion of the injection light that passes through the first sensor cavity body and, in response, reflect second cavity body refection signals that include second cavity first reflection signals from the second hollow cavity first facing surface and second hollow cavity second reflection signals from the second hollow cavity second facing surface, and
the splitter-router is further configured to route a portion of the first cavity body reflection signals and a portion of the second cavity body reflection signals to the interferometer, and another portion of the first cavity body reflection signals and another portion of the second cavity body reflection signals to the series connection of the first reference sensor and the second reference sensor.

## Patentansprüche

1. Verfahren zur Messung von mindestens Druck, Beschleunigung, Dehnung oder Temperatur, aufweisend:
Einleiten von Licht in einer Weise, die ein aufeinanderfolgendes Einfallen auf eine erste reflektierende Oberfläche des Sensors und eine zweite reflektierende Oberfläche des Sensors bewirkt, wobei diese von einer Struktur gestützt werden, die als Reaktion auf Änderungen des Drucks, der Beschleunigung, der Dehnung oder der Temperatur oder von Kombinationen oder Unterkombinationen davon eine optische Weglänge des Sensors zwischen der ersten reflektierenden Oberfläche und der zweiten reflektierenden Oberfläche verändert;
Empfangen von Sensorreflexionen (RX), die Reflexionen des eingeleiteten Lichts von der ersten reflektierenden Oberfläche und Reflexionen des eingeleiteten Lichts von der zweiten reflektierenden Oberfläche aufweisen; Lenken der Sensorreflexionen (RX) zu einem Interferometer, das einen ersten optischen Weg mit einer ersten optischen Weglänge, der an einem Startpunkt des ersten optischen Weges beginnt und an einem ersten Reflektor (126) endet, sowie einen zweiten optischen Weg mit einer zweiten optischen Weglänge aufweist, der an einem Startpunkt des zweiten optischen Weges beginnt und an einem zweiten Reflektor (128) endet;
Weiterleiten der Sensorreflexionen (RX) innerhalb des Interferometers, wobei ein erster Teil (RX1) der Sensorreflexionen (RX) entlang des ersten optischen Weges zum Auftreffen auf den ersten Reflektor (126) weitergeleitet wird und ein zweiter Teil (RX2) der Sensorreflexionen (RX) entlang des zweiten optischen Weges zum Auftreffen auf den zweiten Reflektor (128) weitergeleitet wird; Weiterleiten der Reflexionen vom ersten Reflektor des ersten Teils (RX1) der Sensorreflexionen (RX) entlang des ersten optischen Weges bis zum Anfang des ersten optischen Weges und Weiterleiten der Reflexionen vom zweiten Reflektor des zweiten Teils (RX2) der Sensorreflexionen (RX) entlang des zweiten optischen Weges bis zum Anfang des zweiten optischen Weges;
phasenverschobenes Aufteilen einer Kombination aus den Reflexionen des ersten Reflektors des ersten Teils (RX1) der Sensorreflexionen (RX) und den Reflexionen des zweiten Reflektors des zweiten Teils (RX2) der Sensorreflexionen (RX) in separate Kanalsignale, die erste Kanalsignale, zweite Kanalsignale und dritte Kanalsignale aufweisen, die in Bezug auf ihre Phase zueinander beabstandet sind; und
computergestützte Messung des Drucks, der Beschleunigung, der Dehnung oder der Temperatur oder von Kombinationen oder Unterkombinationen davon, einschließlich computergestützter Erfassung von Änderungen der optischen Weglängendifferenz des Sensors auf der Grundlage der ersten Kanalsignale, der zweiten Kanalsignale und der dritten Kanalsignale.

2. Verfahren nach Anspruch 1, wobei die Phasenverschiebungsverteilung so ausgelegt ist, dass die ersten Kanalsignale, die zweiten Kanalsignale und die dritten Kanalsignale gleichmäßig um 120 Grad beabstandet sind.

3. Verfahren nach Anspruch 1, wobei die computergestützte Messung von Druck, Beschleunigung, Dehnung oder Temperatur oder von Kombinationen oder Unterkombinationen davon so ausgelegt ist, dass eine dynamische Messung von Druck, Beschleunigung, Dehnung oder Temperatur am Sensorhohlraumkörper durchgeführt wird.

4. Verfahren nach Anspruch 1, wobei:
die erste reflektierende Oberfläche eine Grenzfläche zwischen einer Oberfläche eines Zylinderbodens und einem Hohlraum ist und die zweite reflektierende Oberfläche eine Grenzfläche zwischen dem Hohlraum und einer Oberfläche einer Kappe ist, die an dem Zylinderboden befestigt ist, wobei die erste reflektierende Oberfläche von der zweiten reflektierenden Oberfläche um eine optische Weglänge des Hohlraums beabstandet ist; und
die zweite optische Weglänge sich von der ersten optischen Weglänge um eine optische Weglängendifferenz unterscheidet, die gleich oder nahezu gleich der optischen Weglängendifferenz des Hohlraums ist.

5. Verfahren nach Anspruch 4, wobei
der erste optische Weg eine erste optische Faser aufweist, die sich über eine erste optische Faserlänge bis zu einem ersten distalen Ende der optischen Faser erstreckt,
der zweite optische Weg eine zweite optische Faser aufweist, die von der ersten optischen Faser getrennt ist und sich über eine zweite optische Faserlänge bis zu einem zweiten distalen Ende der optischen Faser erstreckt, der erste Reflektor (126) am distalen Ende der ersten optischen Faser positioniert ist und
der zweite Reflektor (128) am distalen Ende der zweiten optischen Faser positioniert ist.

6. Verfahren nach Anspruch 4, wobei
der erste Teil (RX1) des Sensorreflexionssignals zusammen mit dem zweiten Teil (RX2) des gelenkten Reflexionssignals entlang eines optischen Fasersegments (304) mit einer Segmentlänge weitergeleitet wird, wobei die Segmentlänge der ersten optischen Weglänge entspricht;
der erste Teil (RX1) des gelenkten Sensorreflexionssignals vom ersten Reflektor (126) reflektiert wird,
der zweite Teil (RX2) des gelenkten Sensorreflexionssignals durch den ersten Reflektor (126) und entlang eines sich erstreckenden optischen Wegs zum zweiten Reflektor (128) weitergeleitet wird; und
wobei der zweite Teil (RX2) des gelenkten Sensorreflexionssignals vom zweiten Reflektor (128) reflektiert wird, wobei
der sich erstreckende optische Weg eine erstreckte optische Weglänge aufweist, die, summiert mit der Segmentlänge, der zweiten optischen Weglänge entspricht,
wobei das Verfahren insbesondere ferner folgende Schritte aufweist:
Abzweigen eines Teils der Sensorreflexionssignale als abgezweigte Sensorreflexionssignale; und
Durchführen einer computergestützten absoluten Messung des Drucks, der Beschleunigung oder der Dehnung, aufweisend eine computergestützte absolute Messung der optischen Weglängendifferenz des Hohlraums auf der Grundlage der abgezweigten Sensorreflexionssignale.

7. Verfahren nach Anspruch 4, wobei:
der optische Weg des Sensors eine erste reflektierende Oberfläche des Hohlraumkörpers, eine zweite reflektierende Oberfläche des Hohlraumkörpers, eine dritte reflektierende Oberfläche des Hohlraumkörpers und eine vierte reflektierende Oberfläche des Hohlraumkörpers aufweist, wobei die erste reflektierende Oberfläche des Hohlraumkörpers eine Außenfläche des Zylinderbodens ist, auf die das einfallende Licht zuerst auftrifft, die zweite reflektierende Oberfläche des Hohlraumkörpers die erste zugewandte Oberfläche des Hohlraums ist, die dritte reflektierende Oberfläche des Hohlraumkörpers eine Innenfläche der Kappe und die zweite zu Hohlraumkörper hin gerichtete Fläche ist und die vierte reflektierende Oberfläche des Hohlraumkörpers eine nach außen gerichtete Fläche der Kappe ist; und
wobei das Verfahren ferner folgende Schritte aufweist:
Abzweigen eines Teils der Sensorreflexionssignale als abgezweigte Sensorreflexionssignale und
Durchführen einer absoluten Messung einer Temperatur und eines Drucks, aufweisend eine absolute Messung mindestens einer optischen Weglängendifferenz innerhalb des Sensorhohlraumkörpers, zwischen der ersten reflektierenden Oberfläche des Hohlraumkörpers und der zweiten reflektierenden Oberfläche des Hohlraumkörpers,
zwischen der zweiten reflektierenden Oberfläche des Hohlraumkörpers und der dritten reflektierenden Oberfläche des Hohlraumkörpers oder
zwischen der dritten reflektierenden Oberfläche des Hohlraumkörpers und der vierten reflektierenden Oberfläche des Hohlraumkörpers .

8. Verfahren nach Anspruch 6, wobei die absolute Messung mindestens einer optischen Weglängendifferenz innerhalb des Sensorhohlraumkörpers einen optischen Fourier-Spektrometrieverfahren aufweist, wobei der optische Fourier-Spektrometrieverfahren insbesondere folgende Schritte aufweist:
Lenken der abgezweigten Sensorreflexionssignale in ein verstimmbares Interferometer, das einen verstimmbaren Arm und einen Referenzarm aufweist;
Summieren von Ausgabesignalen des verstimmbaren Interferometers, die auf die abgezweigten Sensorreflexionssignale ansprechen, und Erzeugen eines Interferenzsignals auf der Grundlage des Summierens; und
Durchführen einer computergestützten Fourier-Transformation des Interferenzsignals.

9. Verfahren nach Anspruch 6 oder 8, wobei die absolute Messung mindestens einer optischen Weglängendifferenz innerhalb des Sensorhohlraumkörpers ein Lenken der abgezweigten Sensorreflexionssignale zu einem Platteninterferometer und ein Erfassen von Ausgabesignalen des Platteninterferometers durch eine Bildsensoranordnung aufweist und/oder
wobei die absolute Messung mindestens einer optischen Weglängendifferenz innerhalb des Sensorhohlraumkörpers ein Lenken der abgezweigten Sensorreflexionssignale an ein optisches Spektrometer und ein Erzeugen des absoluten Messwerts auf der Grundlage eines vom optischen Spektrometer ausgegebenen Fourier-Spektrometrie-Ergebnisses aufweist und/oder
wobei die absolute Messung mindestens einer optischen Weglängendifferenz innerhalb des Sensorhohlraumkörpers folgende Schritte aufweist:
Lenken der abgezweigten Sensorreflexionssignale zu einem verstimmbaren optischen Bandpassfilter;
Identifizieren von Spektralkomponenten der abgezweigten Sensorreflexionssignale durch ein Verstimmen des verstimmbaren optischen Bandpassfilters; und
Erzeugen des absoluten Messwerts der mindestens einen optischen Weglängendifferenz auf der Grundlage der identifizierten Spektralkomponenten.

10. Verfahren nach Anspruch 6, 8 oder 9,
wobei die absolute Messung mindestens einer optischen Weglängendifferenz innerhalb des Sensorhohlraumkörpers folgende Schritte aufweist:
Lenken der abgezweigten Sensorreflexionssignale zu einem Platteninterferometer, das eine optische Weglängendifferenz der Platte aufweist;
Bestimmen von Spitzenpositionen von Einhüllenden der Interferenzsteifen aus Photodetektorausgabesignalen des Platteninterferometers;
Identifizieren von Übereinstimmungen der optischen Weglänge der Platte anhand der Spitzenpositionen der Einhüllenden der Interferenzsteifen.

11. System zur Messung von mindestens Druck, Beschleunigung, Dehnung oder Temperatur, aufweisend:
einen Sensorhohlraumkörper, der so konfiguriert ist, dass er ein einfallendes Licht empfängt und einen Einfalllicht-optischen Weg für das einfallende Licht bereitstellt, der eine erste dem Hohlraum zugewandte Oberfläche und eine zweite dem Hohlraum zugewandte Oberfläche aufweist, und der so konfiguriert ist, dass Kraftänderungen eine optische Weglängendifferenz im Hohlraum zwischen der ersten dem Hohlraum zugewandten Oberfläche und der zweiten dem Hohlraum zugewandten Oberfläche verändern;
einen Splitter-Router, der so konfiguriert ist, dass er:
ein von einer Lichtquelle erzeugtes Licht empfängt,
das erzeugte Licht als eingekoppeltes Licht über eine optische Faser zum Sensorhohlraumkörper lenkt,
vom Sensorhohlraumkörper Sensorreflexions-Lichtsignale empfängt, die auf das eingekoppelte Licht reagieren und erste Reflexionssignale des Hohlraums von der ersten dem Hohlraum zugewandten Oberfläche sowie zweite Reflexionssignale des Hohlraums von der zweiten dem Hohlraum zugewandten Oberfläche aufweisen, und
mindestens einen Teil der Sensorreflexionssignale des Hohlraumkörpers als weitergelenkte Hohlraumkörper-Reflexionssignale weiterzulenken;
ein Interferometer, das so konfiguriert ist, dass es:
die weitergelenkten Reflexionssignale des Hohlraumkörpers empfängt,
die weitergelenkten Reflexionssignale des Hohlraumkörpers so weiterleitet,
dass ein erster Teil (RX1) der weitergelenkten Reflexionssignale des Hohlraumkörpers über einen ersten optischen Weg bei einem ersten Reflektor (126) ankommt und ein zweiter Teil (RX2) der weitergelenkten Reflexionssignale des Hohlraumkörpers über einen zweiten optischen Weg bei einem zweiten Reflektor (128) ankommt,
einen Teil der weitergelenkten Sensorreflexionssignale als Interferometer-Erst-Reflektor-Signale vom ersten Reflektor (126) zu reflektieren und einen weiteren Teil der weitergelenkten Sensorreflexionssignale als Interferometer-Zweit-Reflektor-Signale vom zweiten Reflektor (128) zu reflektieren;
einen phasenverschiebenden Teiler, der so konfiguriert ist, dass er:
die Signale des ersten Interferometer-Reflektors und die Signale des zweiten Interferometer-Reflektors empfängt und zu Interferometer-Reflektor-Signalen kombiniert,
die Interferometer-Reflektor-Signale in separate Kanalsignale aufteilt, bestehend aus ersten, zweiten und dritten Kanalsignalen, die in Bezug auf ihre Phase zueinander beabstandet sind; und
eine computerimplementierte dynamische Messlogik, die einen Prozessor (138) aufweist, der mit einem Datenspeicher (144) und einem Befehlsspeicher (146) gekoppelt ist, wobei der Befehlsspeicher vom Prozessor ausführbare Befehle speichert, die den Prozessor (138) veranlassen, die Logik auszuführen, um Änderungen der optischen Weglängendifferenz des Hohlraums auf der Grundlage der ersten Kanalsignale, der zweiten Kanalsignale und der dritten Kanalsignale zu erfassen.

12. System nach Anspruch 11, wobei der phasenverschiebende Teiler ferner so konfiguriert ist, dass er die ersten Kanalsignale , die zweiten Kanalsignale und die dritten Kanalsignale gleichmäßig um 120 Grad beabstandet
oder
wobei die computerimplementierte dynamische Messlogik ferner so konfiguriert ist, dass sie die dynamische Messung eines Drucks oder einer Beschleunigung am Sensorhohlraumkörper durchführt
oder
wobei das Interferometer ferner so konfiguriert ist, dass es eine Zweiwegausbreitung der weitergeleiteten Sensorreflexionssignale durchführt, wobei die Zweiwegausbreitung Folgendes aufweist:
Weiterleiten eines ersten Teils (RX1) der weitergelenkten Sensorreflexionssignale zum ersten Reflektor (126) entlang eines ersten optischen Weiterleitungswegs mit einer ersten optischen Weglänge,
Weiterleiten eines zweiten Teils (RX2) der weitergelenkten Sensorreflexionssignale zum zweiten Reflektor (128) entlang eines zweiten optischen Weiterleitungswegs mit einer zweiten optischen Weglänge, wobei sich die zweite optische Weglänge von der ersten optischen Weglänge um eine optische Weglängendifferenz unterscheidet, die gleich oder nahezu gleich der optischen Weglängendifferenz des Hohlraums ist,
wobei insbesondere gilt:
der erste optische Weiterleitungsweg eine erste optische Faser aufweist, die sich über eine erste optische Faserlänge bis zu einem ersten distalen Ende der optischen Faser erstreckt,
der zweite Weiterleitungsweg eine zweite optische Faser aufweist, die von der ersten optischen Faser getrennt ist und sich über eine zweite optische Faserlänge bis zu einem zweiten distalen Ende der optischen Faser erstreckt, der erste Reflektor (126) am distalen Ende der ersten optischen Faser positioniert ist und
der zweite Reflektor (128) am distalen Ende der zweiten optischen Faser positioniert ist,
wobei das Weiterleiten über zwei Wege insbesondere folgendes aufweist:
Weiterleiten des ersten Teils (RX1) des weitergelenkten
Sensorreflexionssignals zusammen mit dem zweiten Teil (RX2) des weitergelenkten Reflexionssignals entlang eines optischen Fasersegments mit einer Segmentlänge, wobei die Segmentlänge der ersten optischen Weglänge entspricht;
Reflektieren des ersten Teils (RX1) des weitergelenkten Sensorreflexionssignals vom ersten Reflektor (126);
Weiterleiten des zweiten Teils (RX2) des weitergelenkten Sensorreflexionssignals durch den ersten Reflektor (126) und entlang eines sich erstreckenden optischen Wegs zum zweiten Reflektor (128); und
Reflektieren des zweiten Teils (RX2) des weitergelenkten Sensorreflexionssignals vom zweiten Reflektor (128), wobei der sich erstreckende optische Weg eine optische Erstreckungsweglänge aufweist, die summiert mit der Segmentlänge der zweiten optischen Weglänge entspricht.
oder
wobei das System ferner folgendes aufweist:
eine Abzweiglogik, die so konfiguriert ist, dass sie einen Teil der Sensorreflexionssignale als abgezweigte Sensorreflexionssignale abzweigt; und
eine computerimplementierte Logik zur Durchführung einer computergestützten absoluten Messung zumindest des Drucks, der Beschleunigung, der Dehnung oder der Temperatur, aufweisend eine computergestützte absolute Messung der optischen Weglängendifferenz des Hohlraums auf der Grundlage der abgezweigten Sensorreflexionssignale.

13. System nach Anspruch 11, wobei:
der Sensorhohlraumkörper eine Kappe aufweist, die mit dem offenen Ende eines Zylinderbodens verbunden ist, in einer Konfiguration, die den Hohlraum abdichtet, und wobei der optische Weg für das einfallende Licht eine erste reflektierende Oberfläche des Hohlraumkörpers, eine zweite reflektierende Oberfläche des Hohlraumkörpers , eine dritte reflektierende Oberfläche des Hohlraumkörpers und eine vierte reflektierende Oberfläche des Hohlraumkörpers aufweist, wobei die erste reflektierende Oberfläche des Hohlraumkörpers eine Außenfläche des Zylinderbodens ist, auf die das einfallende Licht zuerst auftrifft, die zweite reflektierende Oberfläche des Hohlraumkörpers die erste dem Hohlraum zugewandte Oberfläche ist, die dritte reflektierende Oberfläche des Hohlraumkörpers eine Innenfläche der Kappe und die zweite dem Hohlraum zugewandte Oberfläche ist und die vierte reflektierende Oberfläche des Hohlraumkörpers eine nach außen gerichtete Oberfläche der Kappe ist; und
das System ferner aufweist
eine Abzweiglogik, die so konfiguriert ist, dass sie:
einen Teil der Sensorreflexionssignale als abgezweigte Sensorreflexionssignale abzweigt, bevor sich der zweifache optische Weg durch das Interferometer ausbreitet, und
eine absolute Messung einer Temperatur durchzuführen, die eine absolute Messung mindestens einer optischen Weglängendifferenz innerhalb des Sensorhohlraumkörpers aufweist, wobei die mindestens eine optische Wegdifferenz aus der optischen Wegdifferenz zwischen der ersten reflektierenden Oberfläche des Hohlraumkörpers und der zweiten reflektierenden Oberfläche des Hohlraumkörpers, der optischen Wegdifferenz zwischen der zweiten reflektierenden Oberfläche des Hohlraumkörpers und der dritten reflektierenden Oberfläche des Hohlraumkörpers sowie der optischen Wegdifferenz zwischen der dritten reflektierenden Oberfläche des Hohlraumkörpers und der vierten reflektierenden Oberfläche des Hohlraumkörpers stammt,
wobei insbesondere die absolute Messung mindestens einer optischen Wegdifferenz innerhalb des Sensorhohlraumkörpers eine Durchführung eines optischen Fourier-Spektrometrieverfahrens aufweist,
wobei insbesondere das optische Fourier-Spektrometrieverfahren Folgendes aufweist:
Lenken der abgezweigten Sensorreflexionssignale in ein verstimmbares Interferometer, das einen verstimmbaren Arm und einen Referenzarm aufweist;
Summieren von Ausgabesignalen des verstimmbaren Interferometers, die auf die abgezweigten Sensorreflexionssignale ansprechen, und Erzeugen eines Interferenzsignals auf der Grundlage dieses Summierens;
Durchführen einer computergestützten Fourier-Transformation des Interferenzsignals.

14. System nach Anspruch 13, wobei die absolute Messung mindestens einer optischen Wegdifferenz innerhalb des Sensorhohlraumkörpers ein Lenken der abgezweigten Sensorreflexionssignale zu einem Platteninterferometer und ein Erfassen von Ausgabesignalen des Platteninterferometers durch eine Bildsensoranordnung aufweist.

15. System nach Anspruch 11, wobei der Sensorhohlraumkörper ein erster Sensorhohlraumkörper ist, der optische Weg für einfallendes Licht ein erster Sensorhohlraumkörper-optischer Weg ist, die erste dem Hohlraum zugewandte Oberfläche eine erste dem ersten Hohlraum zugewandte Oberfläche ist, die zweite dem Hohlraum zugewandte Oberfläche eine zweite dem ersten Hohlraum zugewandte Oberfläche ist und die Hohlraumkörper-Reflexionssignale Reflexionssignale des ersten Hohlraumkörpers sind, und das System ferner aufweist:
eine Reihenschaltung aus einem ersten Referenzsensor und einem zweiten Referenzsensor, die mit dem optischen Splitter-Router gekoppelt sind;
einen zweiten Sensorhohlraumkörper, der mit dem ersten Sensorhohlraumkörper gekoppelt ist, um einen Teil des durch den ersten Sensorhohlraumkörper hindurchtretenden einfallenden Lichts zu empfangen und einen zweiten optischen Weg des Sensorhohlraumkörpers bereitzustellen, wobei der zweite optische Weg eine erste zugewandte Oberfläche des zweiten Hohlraumkörpers und eine zweite zugewandte Oberfläche des zweiten Hohlraumkörpers aufweist, die so konfiguriert sind,
dass Kraftänderungen eine optische Weglängendifferenz des zweiten Hohlraumkörpers zwischen der ersten dem zweiten Hohlraum zugewandten Oberfläche und der zweiten dem zweiten Hohlraum zugewandten Oberfläche verändern, wobei
der zweite Sensorhohlraumkörper so konfiguriert ist, dass er den Teil des einfallenden Lichts empfängt, der den ersten Sensorhohlraumkörper durchläuft, und daraufhin Reflexionssignale des zweiten Hohlraumkörpers reflektiert, die erste Reflexionssignale des zweiten Hohlraumkörpers von der ersten dem zweiten Hohlraum zugewandten Oberfläche und zweite Reflexionssignale des zweiten Hohlraums von der zweiten dem zweiten Hohlraum zugewandten Oberfläche aufweisen, und
wobei der Splitter-Router ferner so konfiguriert ist, dass er einen Teil der Reflexionssignale des ersten Hohlraumkörpers und einen Teil der Reflexionssignale des zweiten Hohlraumkörpers zum Interferometer lenkt sowie einen weiteren Teil der Reflexionssignale des ersten Hohlraumkörpers und einen weiteren Teil der Reflexionssignale des zweiten Hohlraumkörpers zur Reihenschaltung des ersten Referenzsensors und des zweiten Referenzsensors lenkt.

## Revendications

1. Procédé de mesurage d'au moins une pression, une accélération, une contrainte ou une température, comprenant les étapes consistant à injecter une lumière de manière à ce qu'elle soit successivement incidente sur une première surface réfléchissante de capteur et sur une deuxième surface réfléchissante de capteur, portées par une structure qui, en réponse à des changements dans la pression, l'accélération, la contrainte ou la température, ou des combinaisons ou sous-combinaisons de celles-ci, modifie une distance de trajet optique de capteur entre la première surface réfléchissante et la deuxième surface réfléchissante ;
recevoir des réflexions de capteur (RX), comprenant des réflexions de la lumière injectée provenant de la première surface réfléchissante et des réflexions de la lumière injectée provenant de la deuxième surface réfléchissante ;
acheminer des réflexions de capteur (RX) jusqu'à un interféromètre qui inclut un premier trajet optique, présentant une première longueur de trajet optique, partant d'un point de départ de premier trajet optique et terminant au niveau d'un premier réflecteur (126), et qui inclut un deuxième trajet optique, présentant une deuxième longueur de trajet optique, partant d'un point de départ de deuxième trajet optique et se terminant au niveau d'un deuxième réflecteur (128) ;
propager les réflexions de capteur (RX) à l'intérieur de l'interféromètre, comprenant de propager une première portion (RX1) des réflexions de capteur (RX) le long du premier trajet optique jusqu'à son incidence sur le premier réflecteur (126), propager une deuxième portion (RX2) des réflexions de capteur (RX) le long du deuxième trajet optique jusqu'à son incidence sur le deuxième réflecteur (128), propager les réflexions de premier réflecteur de la première portion (RX1) des réflexions de capteur (RX), le long du premier trajet optique, jusqu'au point de départ du premier trajet optique, et propager les réflexions de deuxième réflecteur de la deuxième portion (RX2) des réflexions de capteur (RX), le long du deuxième trajet optique, jusqu'au point de départ du deuxième trajet optique ;
séparer et déphaser une combinaison des réflexions de premier réflecteur de la première portion (RX1) des réflexions de capteur (RX) et des réflexions de deuxième réflecteur de la deuxième portion (RX2) des réflexions de capteur (RX) en signaux de voie distincts, comprenant des premiers signaux de voie, des deuxièmes signaux de voie et des troisièmes signaux de voie, mutuellement espacés les uns des autres par rapport à une phase ; et
mesurer, par ordinateur, la pression, l'accélération, la contrainte ou la température, ou des combinaisons ou sous-combinaisons de celles-ci, incluant de détecter, par ordinateur, des changements dans la différence de trajet optique de capteur, sur la base des premiers signaux de voie, des deuxièmes signaux de voie et des troisièmes signaux de voie.

2. Procédé selon la revendication 1, dans lequel l'étape de distribution avec déphasage est configurée pour espacer uniformément les premiers signaux de voie, les deuxièmes signaux de voie et les troisièmes signaux de voie de 120 degrés.

3. Procédé selon la revendication 1, dans lequel l'étape consistant à effectuer un mesurage, par ordinateur, de la pression, de l'accélération, de la contrainte ou de la température, ou de combinaisons ou sous-combinaisons de celles-ci, est configurée pour effectuer un mesurage dynamique d'une pression, d'une accélération, d'une contrainte ou d'une température sur le corps de cavité de capteur.

4. Procédé selon la revendication 1, dans lequel
la première surface réfléchissante est une interface entre une surface d'une base cylindrique et une cavité creuse, et la deuxième surface réfléchissante est une interface entre la cavité creuse et une surface d'un capuchon qui est attaché à la base cylindrique, la première surface réfléchissante étant espacée de la deuxième surface réfléchissante à raison d'une distance de trajet optique de la cavité creuse ; et
la deuxième longueur de trajet optique diffère de la première longueur de trajet optique à raison d'une différence de trajet optique qui est égale ou sensiblement égale à la différence de trajet optique de cavité creuse.

5. Procédé selon la revendication 4, dans lequel
le premier trajet optique inclut une première fibre optique s'étendant sur une première longueur de fibre optique jusqu'à une extrémité distale de première fibre optique ;
le deuxième trajet optique inclut une deuxième fibre optique, distincte de la première fibre optique, et s'étendant sur une deuxième longueur de trajet de fibre optique jusqu'à une extrémité distale de deuxième fibre optique ;
le premier réflecteur (126) est positionné à l'extrémité distale de la première fibre optique ; et
le deuxième réflecteur (128) est positionné à l'extrémité distale de la deuxième fibre optique.

6. Procédé selon la revendication 4, comprenant les étapes consistant à propager la première portion (RX1) du signal de réflexion de capteur conjointement avec la deuxième portion (RX2) du signal de réflexion acheminé le long d'un segment de fibre optique (304) présentant une longueur de segment, la longueur de segment correspondant à la première longueur de trajet optique ;
réfléchir la première portion (RX1) du signal de réflexion de capteur acheminé depuis le premier réflecteur (126) ;
propager la deuxième portion (RX2) du signal de réflexion de capteur acheminé à travers le premier réflecteur (126) et le long d'un trajet optique prolongé jusqu'au deuxième réflecteur (128) ; et
réfléchir la deuxième portion (RX2) du signal de réflexion de capteur acheminé depuis le deuxième réflecteur (128), dans lequel
le trajet optique prolongé présente une longueur d'extension de trajet optique qui, additionnée à la longueur de segment, correspond à la deuxième longueur de trajet optique,
le procédé comprenant en outre en particulier les étapes consistant à prélever une portion des signaux de réflexion de capteur, sous forme de signaux de réflexion de capteur prélevés ; et
effectuer, par ordinateur, un mesurage absolu de la pression, de l'accélération ou de la contrainte, comprenant d'effectuer un mesurage absolu, par ordinateur, de la différence de trajet optique de cavité creuse, sur la base des signaux de réflexion de capteur prélevés.

7. Procédé selon la revendication 4, dans lequel
le trajet optique de capteur inclut une première surface réfléchissante de corps de cavité, une deuxième surface réfléchissante de corps de cavité, une troisième surface réfléchissante de corps de cavité et une quatrième surface réfléchissante de corps de cavité, la première surface réfléchissante de corps de cavité étant une surface extérieure de la base cylindrique sur laquelle la lumière injectée est incidente en premier, la deuxième surface réfléchissante de corps de cavité étant la première surface tournée vers la cavité creuse, la troisième surface réfléchissante de corps de cavité étant une face intérieure du capuchon et constituant la deuxième surface tournée vers la cavité creuse, et la quatrième surface réfléchissante de corps de cavité étant une surface du capuchon tournée vers l'extérieur ; et
le procédé comprend en outre les étapes consistant à
prélever une portion des signaux de réflexion de capteur, sous forme de signaux de réflexion de capteur prélevés ; et
effectuer un mesurage absolu d'une température et d'une pression, comprenant d'effectuer un mesurage absolu d'au moins une différence de trajet optique à l'intérieur du corps de cavité de capteur, entre la première surface réfléchissante de corps de cavité et la deuxième surface réfléchissante de corps de cavité, entre la deuxième surface réfléchissante de corps de cavité et la troisième surface réfléchissante de corps de cavité, ou entre la troisième surface réfléchissante de corps de cavité et la quatrième surface réfléchissante de corps de cavité.

8. Procédé selon la revendication 6, dans lequel l'étape de mesurage absolu d'au moins une différence de trajet optique à l'intérieur du corps de cavité de capteur comprend un processus de spectrométrie optique de Fourier,
dans lequel en particulier le processus de spectrométrie optique de Fourier inclut les opérations consistant à :
acheminer les signaux de réflexion de capteur prélevés jusqu'à un interféromètre accordable, comprenant un bras accordable et un bras de référence ;
additionner des signaux de sortie provenant de l'interféromètre accordable, lesdits signaux répondant aux signaux de réflexion de capteur prélevés, et générer un signal d'interférence sur la base de cette addition ; et
effectuer, par ordinateur, une transformée de Fourier du signal d'interférence.

9. Procédé selon la revendication 6 ou 8, dans lequel l'étape consistant à effectuer un mesurage absolu d'au moins une différence de trajet optique à l'intérieur du corps de cavité de capteur comprend d'acheminer les signaux de réflexion de capteur prélevés jusqu'à un interféromètre à lame et de détecter, par un réseau de capteurs d'image, des sorties provenant de l'interféromètre à lame
et/ou
dans lequel l'étape consistant à effectuer un mesurage absolu d'au moins une différence de trajet optique à l'intérieur du corps de cavité de capteur comprend d'acheminer les signaux de réflexion de capteur prélevés jusqu'à un spectromètre optique et de générer le mesurage absolu sur la base d'un résultat de spectrométrie de Fourier qui est sorti par le spectromètre optique
et/ou
dans lequel l'étape consistant à effectuer un mesurage absolu d'au moins une différence de trajet optique à l'intérieur du corps de cavité de capteur comprend de :
acheminer les signaux de réflexion de capteur prélevés jusqu'à un filtre optique passe-bande accordable ;
identifier, par accord du filtre optique passe-bande accordable, des composantes spectrales des signaux de réflexion de capteur prélevés ; et
générer, sur la base des composantes spectrales identifiées, le mesurage absolu de ladite au moins une différence de trajet optique.

10. Procédé selon la revendication 6, 8 ou 9,
dans lequel l'étape consistant à effectuer un mesurage absolu d'au moins une différence de trajet optique à l'intérieur du corps de cavité de capteur comprend de :
acheminer les signaux de réflexion de capteur prélevés jusqu'à un interféromètre à lame qui présente une différence de trajet optique de lame ;
déterminer, à partir des sorties de photodétecteurs de l'interféromètre à lame, des positions de crête d'enveloppes de franges ; et
identifier, à partir des positions de crête d'enveloppes de franges, des correspondances de la différence de trajet optique de lame.

11. Système de mesurage d'au moins une pression, une accélération, une contrainte ou une température, comprenant :
un corps de cavité de capteur, configuré pour recevoir une lumière injectée et pour fournir, pour la lumière injectée, un trajet optique de lumière injectée qui inclut une première surface tournée vers une cavité creuse et une deuxième surface tournée vers une cavité creuse, et configuré de telle sorte que des changements dans la force modifient une différence de trajet optique de cavité creuse entre la première surface tournée vers la cavité creuse et la deuxième surface tournée vers la cavité creuse ;
un séparateur-achemineur, configuré pour :
recevoir une lumière provenant d'une source lumineuse,
acheminer la lumière provenant de la source, en tant que lumière d'injection, sur une fibre optique jusqu'au corps de cavité de capteur, recevoir, depuis le corps de cavité de capteur, des signaux optiques de réflexion de capteur qui répondent à la lumière injectée et comprennent des premiers signaux de réflexion de cavité creuse provenant de la première surface tournée vers la cavité creuse et des deuxièmes signaux de réflexion de la cavité creuse provenant de la deuxième surface tournée vers la cavité creuse, et
acheminer au moins une portion des signaux de réflexion de capteur de corps de cavité, sous forme de signaux de réflexion de corps de cavité acheminés ;
un interféromètre, configuré pour :
recevoir les signaux de réflexion de corps de cavité acheminés,
propager les signaux de réflexion de corps de cavité acheminés de telle sorte qu'une première portion (RX1) des signaux de réflexion de corps de cavité acheminés parvient, via un premier trajet optique, à un premier réflecteur (126), et qu'une deuxième portion (RX2) des signaux de réflexion de corps de cavité acheminés parvient, via un deuxième trajet optique, à un deuxième réflecteur (128),
réfléchir, depuis le premier réflecteur (126), une portion des signaux de réflexion de capteur acheminés, sous forme de premiers signaux de réflecteur d'interféromètre, et
réfléchir, depuis le deuxième réflecteur (128), une autre portion des signaux de réflexion de capteur acheminés, sous forme de deuxièmes signaux de réflecteur d'interféromètre ;
un séparateur-déphaseur, configuré pour :
recevoir et combiner, en signaux de réflecteur d'interféromètre, les premiers signaux de réflecteur d'interféromètre et les deuxièmes signaux de réflecteur d'interféromètre ;
séparer les signaux de réflecteur d'interféromètre en signaux de voie distincts comprenant des premiers signaux de voie, des deuxièmes signaux de voie et des troisièmes signaux de voie, mutuellement espacés les uns des autres par rapport à une phase ; et
une logique de mesurage dynamique mise en œuvre par ordinateur, comprenant un processeur (138) couplé à une mémoire de données (144) et à une mémoire d'instructions (146), la mémoire d'instructions stockant des instructions exécutables par le processeur, qui amènent le processeur (138) à effectuer une logique destinée à détecter des changements dans la différence de trajet optique de cavité creuse, sur la base des premiers signaux de voie, des deuxièmes signaux de voie et des troisièmes signaux de voie.

12. Système selon la revendication 11,
dans lequel le séparateur-déphaseur est en outre configuré pour espacer uniformément les premiers signaux de voie, les deuxièmes signaux de voie et les troisièmes signaux de voie de 120 degrés ; ou
dans lequel la logique de mesurage dynamique mise en œuvre par ordinateur est en outre configurée pour effectuer le mesurage dynamique d'une pression ou d'une accélération sur le corps de cavité de capteur ;
ou
dans lequel l'interféromètre est en outre configuré pour effectuer une propagation selon deux trajets des signaux de réflexion de capteur acheminés, la propagation selon deux trajets incluant :
de propager une première portion (RX1) des signaux de réflexion de capteur acheminés jusqu'au premier réflecteur (126), le long d'un premier trajet de propagation optique présentant une première longueur de trajet optique ;
de propager une deuxième portion (RX2) des signaux de réflexion de capteur acheminés jusqu'au deuxième réflecteur (128), le long d'un deuxième trajet de propagation optique présentant une deuxième longueur de trajet optique ;
la deuxième longueur de trajet optique différant de la première longueur de trajet optique à raison d'une différence de trajet optique égale ou sensiblement égale à la différence de trajet optique de cavité creuse,
dans lequel en particulier :
le premier trajet de propagation optique inclut une première fibre optique s'étendant sur une première longueur de fibre optique jusqu'à une extrémité distale de première fibre optique ;
le deuxième trajet de propagation inclut une deuxième fibre optique distincte de la première fibre optique et s'étendant sur une deuxième longueur de trajet de fibre optique jusqu'à une extrémité distale de la deuxième fibre optique ;
le premier réflecteur (126) est positionné à l'extrémité distale de la première fibre optique ; et
le deuxième réflecteur (128) est positionné à l'extrémité distale de la deuxième fibre optique ;
dans lequel en particulier la propagation selon deux trajets inclut de :
propager la première portion (RX1) du signal de réflexion de capteur acheminé conjointement avec la deuxième portion (RX2) du signal de réflexion acheminé le long d'un segment de fibre optique présentant une longueur de segment, la longueur de segment correspondant à la première longueur de trajet optique ;
réfléchir la première portion (RX1) du signal de réflexion de capteur acheminé depuis le premier réflecteur (126) ;
propager la deuxième portion (RX2) du signal de réflexion de capteur acheminé à travers le premier réflecteur (126) et le long d'un trajet optique prolongé jusqu'au deuxième réflecteur (128) ; et
réfléchir la deuxième portion (RX2) du signal de réflexion de capteur acheminé depuis le deuxième réflecteur (128),
le trajet optique prolongé présentant une longueur d'extension de trajet optique qui, ajoutée à la longueur de segment, correspond à la deuxième longueur de trajet optique ;
ou
comprenant en outre :
une logique de prélèvement, configurée pour prélever une portion des signaux de réflexion de capteur, sous forme de signaux de réflexion de capteur prélevés ; et
une logique mise en œuvre par ordinateur destinée à effectuer un mesurage absolu, par ordinateur, d'au moins la pression, l'accélération, la contrainte ou la température, comprenant d'effectuer un mesurage absolu, par ordinateur, de la différence de trajet optique de cavité creuse, sur la base des signaux de réflexion de capteur prélevés.

13. Système selon la revendication 11, dans lequel :
le corps de cavité de capteur inclut un capuchon fixé par liaison à l'extrémité ouverte d'une base cylindrique, dans une configuration d'étanchéité de la cavité creuse, et le trajet optique de lumière injectée inclut une première surface réfléchissante de corps de cavité, une deuxième surface réfléchissante de corps de cavité, une troisième surface réfléchissante de corps de cavité et une quatrième surface réfléchissante de corps de cavité, la première surface réfléchissante de corps de cavité étant une surface extérieure de la base cylindrique sur laquelle la lumière injectée est incidente en premier, la deuxième surface réfléchissante de corps de cavité étant la première surface tournée vers la cavité creuse, la troisième surface réfléchissante de corps de cavité étant une face intérieure du capuchon et constituant la deuxième surface tournée vers la cavité creuse, et la quatrième surface réfléchissante de corps de cavité étant une surface du capuchon tournée vers l'extérieur ; et
le système comprend en outre
une logique de prélèvement, configurée pour :
prélever une portion des signaux de réflexion de capteur, sous forme de signaux de réflexion de capteur prélevés, avant la propagation selon deux trajets optiques par l'interféromètre ; et
effectuer un mesurage absolu d'une température, comprenant d'effectuer un mesurage absolu d'au moins une différence de trajet optique à l'intérieur du corps de cavité de capteur, ladite au moins une différence de trajet optique étant choisie parmi une différence de trajet optique entre la première surface réfléchissante de corps de cavité et la deuxième surface réfléchissante de corps de cavité, la différence de trajet optique entre la deuxième surface réfléchissante de corps de cavité et la troisième surface réfléchissante de corps de cavité, et la différence de trajet optique entre la troisième surface réfléchissante de corps de cavité et la quatrième surface réfléchissante de corps de cavité,
dans lequel en particulier le mesurage absolu d'au moins une différence de trajet optique à l'intérieur du corps de cavité de capteur comprend d'effectuer un processus de spectrométrie optique de Fourier,
dans lequel en particulier le procédé de spectrométrie optique de Fourier inclut de :
acheminer des signaux de réflexion de capteur prélevés jusque dans un interféromètre accordable, comprenant un bras accordable et un bras de référence ;
additionner des signaux de sortie provenant de l'interféromètre accordable, lesdits signaux répondant aux signaux de réflexion de capteur prélevés, et générer, sur la base de l'addition, un signal d'interférence ;
effectuer, par ordinateur, une transformée de Fourier du signal d'interférence.

14. Système selon la revendication 13, dans lequel le mesurage absolu d'au moins une différence de trajet optique à l'intérieur du corps de cavité de capteur comprend d'acheminer les signaux de réflexion de capteur prélevés jusqu'à un interféromètre à lame et de détecter, via un réseau de capteurs d'image, des sorties provenant de l'interféromètre à lame.

15. Système selon la revendication 11, dans lequel le corps de cavité de capteur est un premier corps de cavité de capteur, le trajet optique de lumière injectée est un premier trajet de lumière du corps de cavité de capteur, la première surface tournée vers la cavité creuse est une première surface tournée vers une première cavité creuse, la deuxième surface tournée vers la cavité creuse est une deuxième surface tournée vers une première cavité creuse, et les signaux de réflexion de corps de cavité sont des premiers signaux de réflexion de corps de cavité, et le système comprend en outre :
une connexion en série d'un premier capteur de référence et d'un deuxième capteur de référence, couplé au séparateur-achemineur ;
un deuxième corps de cavité de capteur, couplé au premier corps de cavité de capteur pour recevoir une portion de la lumière injectée qui passe à travers le premier corps de cavité de capteur et fournir un deuxième trajet optique de lumière du corps de cavité de capteur pour ladite portion de la lumière injectée, le deuxième trajet optique comprenant une première surface tournée vers une deuxième cavité creuse et une deuxième surface tournée vers une deuxième cavité creuse, le deuxième corps de cavité de capteur étant configuré de telle sorte que des changements dans une force modifient une deuxième différence de trajet optique de deuxième cavité creuse entre la première surface tournée vers la deuxième cavité creuse et la deuxième surface tournée vers la deuxième cavité creuse, dans lequel le deuxième corps de cavité de capteur est configuré pour recevoir la portion de la lumière injectée qui passe à travers le premier corps de cavité de capteur et, en réponse, réfléchir des deuxièmes signaux de réflexion de corps de cavité qui incluent des premiers signaux de réflexion de deuxième cavité provenant de la première surface tournée vers la deuxième cavité creuse et des deuxièmes signaux de réflexion de deuxième cavité creuse provenant de la deuxième surface tournée vers la deuxième cavité creuse ; et
le séparateur-achemineur est en outre configuré pour acheminer une portion des premiers signaux de réflexion de corps de cavité et une portion des deuxièmes signaux de réflexion de corps de cavité jusqu'à l'interféromètre, et une autre portion des premiers signaux de réflexion de corps de cavité et une autre portion des deuxièmes signaux de réflexion de corps de cavité jusqu'à la connexion en série du premier capteur de référence et du deuxième capteur de référence.
